(19) Europäisches Patentamt
European Patent Office
Office européen des brevets

(11) EP 1 443 578 A1

(12) **EUROPEAN PATENT APPLICATION**
published in accordance with Art. 158(3) EPC

(43) Date of publication:
**04.08.2004 Bulletin 2004/32**

(51) Int Cl.⁷: **H01M 6/16**

(21) Application number: **02775406.8**

(22) Date of filing: **28.10.2002**

(86) International application number:
**PCT/JP2002/011173**

(87) International publication number:
**WO 2003/041197 (15.05.2003 Gazette 2003/20)**

(84) Designated Contracting States:
**AT BE BG CH CY CZ DE DK EE ES FI FR GB GR IE IT LI LU MC NL PT SE SK TR**

(30) Priority: **07.11.2001 JP 2001341464**
**05.12.2001 JP 2001371305**
**05.12.2001 JP 2001371356**
**05.12.2001 JP 2001371378**
**05.12.2001 JP 2001371499**

(71) Applicant: **Bridgestone Corporation**
**Tokyo 104-8340 (JP)**

(72) Inventors:
- **OTSUKI, Masashi**
  **Musashimurayama-shi, Tokyo 208-0001 (JP)**
- **EGUCHI, Shinichi**
  **Kawasaki-shi, Kanagawa 221-0053 (JP)**
- **KANNO, Yushi**
  **Kodaira-shi, Tokyo 187-0031 (JP)**

(74) Representative: **Whalley, Kevin**
**MARKS & CLERK,**
**57-60 Lincoln's Inn Fields**
**London WC2A 3LS (GB)**

(54) **NON-AQUEOUS ELECTROLYTE PRIMARY CELL AND ADDITIVE FOR NON-AQUEOUS ELECTROLYTE OF THE CELL**

(57) In a non-aqueous electrolyte primary cell comprising a positive electrode, a negative electrode and a non-aqueous electrolyte containing a support salt, a phosphazene derivative and/or an isomer of a phosphazene derivative is included in the non-aqueous electrolyte, whereby the safety of the non-aqueous electrolyte primary cell is improved while maintaining cell characteristics thereof.

EP 1 443 578 A1

## Description

### TECHNICAL FIELD

This invention relates to a non-aqueous electrolyte primary cell and an additive for the non-aqueous electrolyte of the cell, and more particularly to a non-aqueous electrolyte primary cell having an excellent safety while maintaining cell characteristics equal to those of the conventional non-aqueous electrolyte primary cell.

### BACKGROUND ART

Recently, small-size, light weight and long life cells having a high energy density are particularly demanded as a power source for small-size electron equipments with the rapid advance of electronics. Since non-aqueous electrolyte lithium primary cells using lithium as a negative electrode (lithium primary cell and the like) are lowest in the electrode potential of lithium among metals and large in the electric capacity per unit volume, they are known as a cell having a high energy density, and many kinds of the cells are actively studied and a part thereof is put into practice and supplied to a market and used as a power source for cameras, electronic watches, various memory backups and the like.

In the lithium primary cell, lithium is frequently used as a material forming the negative electrode. However, lithium violently reacts with a compound having an active proton such as water, alcohol or the like, so that an electrolyte used is limited to a non-aqueous solution or a solid electrolyte. The solid electrolyte is low in the ionic conduction and is restricted to only a use in a low discharge current. Therefore, the electrolyte generally used is a non-proton organic solvent such as ester series organic solvents or the like at the present.

However, these non-aqueous electrolyte primary cells are high in the performances but have the following problems in view of the safety.

At first, when an alkali metal (particularly lithium metal, lithium alloy or the like) is used as a negative electrode material of the non-aqueous electrolyte primary cell, since the alkali metal is very high in the activity to water, if the sealing of the cell is incomplete and water penetrates into the cell, there is a problem that a risk of causing the generation of hydrogen, ignition or the like by the reaction of the negative electrode material with water is high.

Also, since the lithium metal is low in the melting point (about 170°C), if a large current violently flows in the short-circuiting or the like, the cell abnormally generates heat and there is a problem that a very risk state such as fusion of the cell or the like is caused.

Further, there is a problem that the electrolyte based on the organic solvent is vaporized or decomposed accompanied with the aforementioned heat generation of the cell to generate a gas or the explosion-ignition of the cell is caused by the generated gas.

Moreover, the recharging may be caused by erroneous operation even in the primary cell not assuming the recharging by nature, and in this case there is a problem that the ignition is caused.

In order to solve the above problems, there is proposed a technique that a cell such as a cylindrical cell or the like is provided with such a mechanism that when a temperature raises in the short-circuiting of the cell or the like to increase a pressure inside the cell, a safety valve is operated and at the same time an electrode terminal is broken to control the flowing of excess current of more than a given quantity into the cylindrical cell (Nikkan Kogyo Shinbunsha, "Electron Technology", vol. 39, No. 9, 1997).

However, it is not reliable that the above mechanism is always operated at a normal state. If it is not normally operated, the heat generation due to the excess current becomes large and the occurrence of a risky state such as ignition or the like is feared and hence problems still remain. Further, the above safety circuit is not usually attached to the primary cell because the recharging is not required. Therefore, the risk is always pointed out.

In order to solve these problems, therefore, it is demanded to develop non-aqueous electrolyte primary cells fundamentally having a high safety instead of the safety countermeasure by the arrangement of additional parts such as safety valve and the like as mentioned above.

On the other hand, there are characteristics required in the non-aqueous electrolyte for the primary cell in addition to the safety. As a cell using the non-aqueous electrolyte are mentioned a lithium primary cell, a lithium secondary cell, a lithium ion secondary cell and the like. The primary cell and the secondary cell differ in many respects of conditions, materials and the like used as mentioned later.

In the lithium ion secondary cell, a carbon material or the like is used as a negative electrode and a lithium-cobalt composite oxide or the like is used as a positive electrode, so that it is required to use an electrolyte being stable to these materials and capable of realizing high cycle characteristics. In the lithium secondary cell, lithium or a lithium alloy is used as a negative electrode, and a dichalcogenide or an oxide of V, Mn or the like is used as a positive electrode, so that it is required to use an electrolyte being stable to these materials and capable of realizing high cycle characteristics likewise the lithium ion secondary cell.

On the other hand, the lithium primary cell is required to be stable against an electrode material, but the cycle characteristics may be ignored on account of the primary cell (oxidation-reduction reaction of an electrolyte in the recharging may be ignored), so that it is demanded to use an electrolyte having excellent discharge capacity, energy density, low and high temperature characteristics, and further low and high temperature storage properties.

Therefore, the materials to be used in the secondary cell and the primary cell differ, and hence the material stability required in the electrolyte differs but also characteristics as a cell required in the electrolyte differ. As a result, it is unknown that the electrolyte effective as a secondary cell is effective as an electrolyte for the primary cell, and an electrolyte most suitable for the primary cell is demanded.

Furthermore, the conventional non-aqueous electrolyte primary cells are apt to be easily deteriorated though the performances are high, so that there is a problem that the high performances can not be maintained over a long time. For this end, it is strongly demanded to develop non-aqueous electrolyte primary cells capable of maintaining cell characteristics such as high discharge capacity, high electric conductivity, low internal resistance and the like over a long time without causing deterioration.

In areas and season particularly having a low ambient temperature, it is required to have excellent cell characteristics over a long time even under a low temperature condition, so that non-aqueous electrolyte primary cells having excellent low-temperature properties are demanded.

Further, it is strongly demanded to develop non-aqueous electrolyte primary cells simultaneously attaining various characteristics such as a low internal resistance, a high electric conductivity, a long-time stability and the like with the upgrading of the techniques.

## DISCLOSURE OF THE INVENTION

The invention is a subject matter for solving various problems of the conventional technique and satisfying the various demands and achieving the following objects. That is, it is an object of the invention to provide a non-aqueous electrolyte primary cell having an excellent safety while maintaining the cell characteristics equal to those of the conventional non-aqueous electrolyte primary cell.

It is another object of the invention to provide an additive for the non-aqueous electrolyte of the primary cell capable of preparing a non-aqueous electrolyte primary cell having an excellent deterioration resistance, a low interfacial resistance of the non-aqueous electrolyte, a low internal resistance, a high electric conductivity, excellent low-temperature properties and an excellent long-time stability by adding to the non-aqueous electrolyte primary cell as well as a non-aqueous electrolyte primary cell having improved deterioration resistance, low-temperature properties and long-time stability by using a non-aqueous electrolyte containing this additive.

Means for achieving the above objects are as follows.

1. A non-aqueous electrolyte comprising a positive electrode, a negative electrode, a support salt and a non-aqueous electrolyte containing a phosphazene derivative having a viscosity at 25°C of not more than 100 mPa·s (100 cP).
2. A non-aqueous electrolyte comprising a positive electrode, a negative electrode, a support salt and a non-aqueous electrolyte containing a phosphazene derivative having a viscosity at 25°C of not more than 20 mPa·s (20 cP) and an aprotic organic solvent.
3. A non-aqueous electrolyte primary cell according to the item 2, wherein the aprotic organic solvent contains a cyclic or chain ester compound or a chain ether compound.
4. A non-aqueous electrolyte primary cell according to the item 1 or 2, wherein the phosphazene derivative is represented by the following formula (I) or (II):

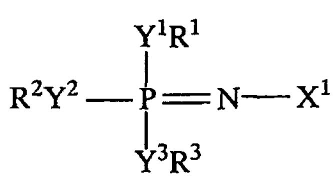

····· (I)

(wherein $R^1$, $R^2$ and $R^3$ are independently a monovalent substituent or a halogen element, $X^1$ is an organic group containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently a bivalent connecting group, a bivalent element or a single bond) or

$$(NPR^4{}_2)_n \quad (II)$$

(wherein $R^4$ is a monovalent substituent or a halogen element, and n is 3 to 15).

5. A non-aqueous electrolyte primary cell according to any one of the items 1 to 4, wherein the non-aqueous electrolyte has a limit oxygen index of not less than 21% by volume.

6. A non-aqueous electrolyte primary cell according to the item 4, wherein the phosphazene derivative of the formula (II) is a phosphazene derivative represented by the following formula (III):

$$(NPF_2)_n \quad (III)$$

(wherein n is 3 to 13).

7. A non-aqueous electrolyte primary cell according to the item 6, wherein a content of the phosphazene derivative of the formula (III) in the non-aqueous electrolyte is not less than 1% by volume.

8. A non-aqueous electrolyte primary cell according to the item 7, wherein the content of the phosphazene derivative of the formula (III) in the non-aqueous electrolyte is not less than 2% by volume.

9. A non-aqueous electrolyte primary cell according to any one of the items 6 to 8, wherein the non-aqueous electrolyte has a viscosity at 25°C of not more than 4.0 mPa·s (4.0 cP).

10. A non-aqueous electrolyte primary cell according to any one of the items 6 to 9, wherein the non-aqueous electrolyte has a limit oxygen index of not less than 21% by volume.

11. A non-aqueous electrolyte primary cell according to the item 4, wherein the phosphazene derivative of the formula (II) is a phosphazene derivative represented by the following formula (IV):

$$(NPR^5{}_2)_n \quad (IV)$$

(wherein $R^5$ is independently a monovalent substituent or a fluorine element, and n is 3-8 provided that at least one of all $R^5$s is a fluorine-containing monovalent substituent or a fluorine element but all $R^5$s are not fluorine element).

12. A non-aqueous electrolyte primary cell according to the item 11, wherein at least one of all $R^5$s is a fluorine element and the monovalent substituent is an alkoxy group.

13. A non-aqueous electrolyte primary cell according to the item 12, wherein the alkoxy group is selected from the group consisting of methoxy group, ethoxy group and phenoxy group.

14. A non-aqueous electrolyte primary cell according to the item 11, wherein the fluorine-containing monovalent substituent is trifluoroethoxy group.

15. A non-aqueous electrolyte primary cell according to the item 11, wherein a content of the phosphazene derivative of the formula (IV) in the non-aqueous electrolyte is not less than 2% by volume.

16. A non-aqueous electrolyte primary cell according to the item 15, wherein the content of the phosphazene derivative of the formula (IV) in the non-aqueous electrolyte is not less than 10% by volume.

17. A non-aqueous electrolyte primary cell according to the item 11, wherein the non-aqueous electrolyte comprises $LiBF_4$ as a support salt, γ-butyrolactone and/or propylene carbonate as an aprotic solvent and not less than 5% by volume of the phosphazene derivative represented by the formula (IV).

18. A non-aqueous electrolyte primary cell according to the item 11, wherein the non-aqueous electrolyte comprises $LiCF_3SO_3$ as a support salt, γ-butyrolactone and/or propylene carbonate as an aprotic solvent and not less than 5% by volume of the phosphazene derivative represented by the formula (IV).

19. A non-aqueous electrolyte primary cell according to any one of the items 11 to 18, wherein the non-aqueous electrolyte has a limit oxygen index of not less than 22% by volume.

20. A non-aqueous electrolyte primary cell comprising a positive electrode, a negative electrode, and a non-aqueous electrolyte containing a support salt and a phosphazene derivative being a solid at 25°C and represented by the following formula (V):

$$(NPR^6{}_2)_n \quad (V)$$

(wherein $R^6$ is independently a monovalent substituent or a halogen element, and n is 3 to 6).

21. A non-aqueous electrolyte primary cell according to the item 20, wherein the phosphazene derivative of the

formula (V) is at least one of a structure in which in the formula (V) $R^6$ is methoxy group and n is 3, a structure in which in the formula (V) $R^6$ is either methoxy group or phenoxy group and n is 4, a structure in which in the formula (V) $R^6$ is ethoxy group and n is 4, a structure in which in the formula (V) $R^6$ is isopropoxy group and n is 3 or 4, a structure in which in the formula (V) $R^6$ is n-propoxy group and n is 4, a structure in which in the formula (V) $R^6$ is trifluoroethoxy group and n is 3 or 4, and a structure in which in the formula (V) $R^6$ is phenoxy group and n is 3 or 4.

22. A non-aqueous electrolyte primary cell according to the item 20, wherein the non-aqueous electrolyte has a viscosity at 25°C of not more than 10 mPa·s (10 cP).

23. A non-aqueous electrolyte primary cell according to the item 20, wherein a content of the phosphazene derivative of the formula (V) in the non-aqueous electrolyte is not more than 40% by weight.

24. A non-aqueous electrolyte primary cell according to the item 20, wherein a content of the phosphazene derivative of the formula (V) in the non-aqueous electrolyte is not less than 2% by weight.

25. A non-aqueous electrolyte primary cell according to the item 20, wherein a content of the phosphazene derivative of the formula (V) in the non-aqueous electrolyte is not less than 20% by weight.

26. A non-aqueous electrolyte primary cell according to the item 20, wherein a content of the phosphazene derivative of the formula (V) in the non-aqueous electrolyte is not less than 30% by weight.

27. A non-aqueous electrolyte primary cell according to the item 20, wherein the non-aqueous electrolyte contains an aprotic organic solvent.

28. A non-aqueous electrolyte primary cell according to the item 27, wherein the aprotic organic solvent contains a cyclic or chain ester compound or a chain ether compound.

29. A non-aqueous electrolyte primary cell according to the item 20, wherein the non-aqueous electrolyte comprises $LiBF_4$ as a support salt, γ-butyrolactone and/or propylene carbonate as an aprotic solvent and 5-10% by weight of the phosphazene derivative represented by the formula (V).

30. A non-aqueous electrolyte primary cell according to the item 20, wherein the non-aqueous electrolyte comprises $LiBF_4$ as a support salt, γ-butyrolactone and/or propylene carbonate as an aprotic solvent and more than 10% by weight of the phosphazene derivative represented by the formula (V).

31. A non-aqueous electrolyte primary cell according to the item 20, wherein the non-aqueous electrolyte comprises $LiCF_3SO_3$ as a support salt, γ-butyrolactone and/or propylene carbonate as an aprotic solvent and 5-25% by weight of the phosphazene derivative represented by the formula (V).

32. A non-aqueous electrolyte primary cell according to the item 20, wherein the non-aqueous electrolyte comprises $LiCF_3SO_3$ as a support salt, γ-butyrolactone and/or propylene carbonate as an aprotic solvent and more than 25% by volume of the phosphazene derivative represented by the formula (V).

33. A non-aqueous electrolyte primary cell according to any one of the items 20 to 25, 27 to 29 and 31, wherein the non-aqueous electrolyte has a limit oxygen index of not less than 21% by volume.

34. A non-aqueous electrolyte primary cell according to any one of the items 20 to 24, 26 to 28, 30 and 32, wherein the non-aqueous electrolyte has a limit oxygen index of not less than 23% by volume.

35. A non-aqueous electrolyte primary cell comprising a positive electrode, a negative electrode, and a non-aqueous electrolyte containing a support salt and isomers of phosphazene derivatives represented by the following formulae (VI) and (VII):

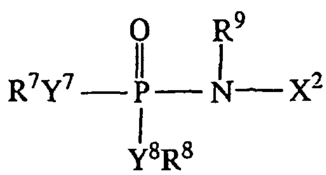

· · · · · (VI)

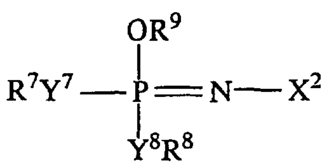

· · · · · (VII)

(wherein $R^7$, $R^8$ and $R^9$ are independently a monovalent substituent or a halogen element, $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are

independently a bivalent connecting group, a bivalent element or a single bond).

36. A non-aqueous electrolyte primary cell according to the item 35, which contains a phosphazene derivative represented by the formula (VII).

37. A non-aqueous electrolyte primary cell according to the item 36, wherein a total content of the isomer of the phosphazene derivative represented by the formulae (VI) and (VII) and the phosphazene derivative represented by the formula (VII) in the non-aqueous electrolyte is not less than 1% by volume.

38. A non-aqueous electrolyte primary cell according to the item 37, wherein the total content of the isomer of the phosphazene derivative represented by the formulae (VI) and (VII) and the phosphazene derivative represented by the formula (VII) in the non-aqueous electrolyte is not less than 2% by volume.

39. A non-aqueous electrolyte primary cell according to the item 38, wherein the total content of the isomer of the phosphazene derivative represented by the formulae (VI) and (VII) and the phosphazene derivative represented by the formula (VII) in the non-aqueous electrolyte is not less than 20% by volume.

40. A non-aqueous electrolyte primary cell according to the item 38, wherein the total content of the isomer of the phosphazene derivative represented by the formulae (VI) and (VII) and the phosphazene derivative represented by the formula (VII) in the non-aqueous electrolyte is not less than 30% by volume.

41. A non-aqueous electrolyte primary cell according to the item 35, wherein the non-aqueous electrolyte contains an aprotic organic solvent.

42. A non-aqueous electrolyte primary cell according to the item 41, wherein the aprotic organic solvent contains a cyclic or chain ester compound or a chain ether compound.

43. A non-aqueous electrolyte primary cell according to the item 35 or 36, wherein the non-aqueous electrolyte comprises $LiBF_4$ as a support salt, not less than 45% by volume of γ-butyrolactone and/or propylene carbonate as an aprotic solvent and 1.5-10% by weight in total of the isomer of the phosphazene derivative represented by the formulae (VI) and (VII) and the phosphazene derivative represented by the formula (VII).

44. A non-aqueous electrolyte primary cell according to the item 35 or 36, wherein the non-aqueous electrolyte comprises $LiBF_4$ as a support salt, not less than 45% by volume of γ-butyrolactone and/or propylene carbonate as an aprotic solvent and more than 10% by weight in total of the isomer of the phosphazene derivative represented by the formulae (VI) and (VII) and the phosphazene derivative represented by the formula (VII).

45. A non-aqueous electrolyte primary cell according to the item 35 or 36, wherein the non-aqueous electrolyte comprises $LiCF_3SO_3$ as a support salt, not less than 45% by volume of γ-butyrolactone and/or propylene carbonate as an aprotic solvent and 2.5-15% by weight in total of the isomer of the phosphazene derivative represented by the formulae (VI) and (VII) and the phosphazene derivative represented by the formula (VII).

46. A non-aqueous electrolyte primary cell according to the item 35 or 36, wherein the non-aqueous electrolyte comprises $LiCF_3SO_3$ as a support salt, not less than 45% by volume of γ-butyrolactone and/or propylene carbonate as an aprotic solvent and more than 15% by weight in total of the isomer of the phosphazene derivative represented by the formulae (VI) and (VII) and the phosphazene derivative represented by the formula (VII).

47. A non-aqueous electrolyte primary cell according to any one of the items 35 to 39, 41 to 43 and 45, wherein the non-aqueous electrolyte has a limit oxygen index of not less than 21% by volume.

48. A non-aqueous electrolyte primary cell according to any one of the items 35 to 38, 40 to 42, 44 and 46, wherein the non-aqueous electrolyte has a limit oxygen index of not less than 23% by volume.

49. An additive for a non-aqueous electrolyte of a primary cell comprising a phosphazene derivative represented by the following formula (I) or (II):

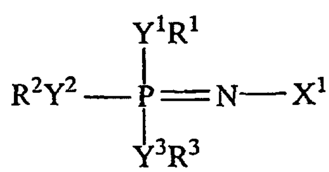

······ (I)

(wherein $R^1$, $R^2$ and $R^3$ are independently a monovalent substituent or a halogen element, $X^1$ is an organic group containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently a bivalent connecting group, a bivalent element or a single bond) or

$$(NPR^4{}_2)_n \qquad (II)$$

(wherein $R^4$ is a monovalent substituent or a halogen element, and n is 3 to 15).

50. An additive for a non-aqueous electrolyte of a primary cell according to the item 49, which has a limit oxygen index of not less than 21% by volume.

51. An additive for a non-aqueous electrolyte of a primary cell according to the item 49, wherein the phosphazene derivative of the formula (II) is a phosphazene derivative represented by the following formula (III):

$$(NPF_2)_n \qquad (III)$$

(wherein n is 3 to 13).

52. An additive for a non-aqueous electrolyte of a primary cell according to the item 49, wherein the phosphazene derivative of the formula (II) is a phosphazene derivative represented by the following formula (IV):

$$(NPR^5{}_2)_n \qquad (IV)$$

(wherein $R^5$ is independently a monovalent substituent or a fluorine element, and n is 3-8 provided that at least one of all $R^5$s is a fluorine-containing monovalent substituent or a fluorine element but all $R^5$s are not fluorine element).

53. An additive for a non-aqueous electrolyte of a primary cell according to the item 52, wherein at least one of all $R^5$s is a fluorine element and the monovalent substituent is an alkoxy group.

54. An additive for a non-aqueous electrolyte of a primary cell according to the item 53, wherein the alkoxy group is selected from the group consisting of methoxy group, ethoxy group and phenoxy group.

55. An additive for a non-aqueous electrolyte of a primary cell according to the item 52, wherein the fluorine-containing monovalent substituent is trifluoroethoxy group.

56. An additive for a non-aqueous electrolyte of a primary cell comprising a phosphazene derivative being a solid at 25°C and represented by the following formula (V):

$$(NPR^6{}_2)_n \qquad (V)$$

(wherein $R^6$ is independently a monovalent substituent or a halogen element, and n is 3 to 6).

57. An additive for a non-aqueous electrolyte of a primary cell according to the item 56, wherein the phosphazene derivative of the formula (V) is at least one of a structure in which in the formula (V) $R^6$ is methoxy group and n is 3, a structure in which in the formula (V) $R^6$ is either methoxy group or phenoxy group and n is 4, a structure in which in the formula (V) $R^6$ is ethoxy group and n is 4, a structure in which in the formula (V) $R^6$ is isopropoxy group and n is 3 or 4, a structure in which in the formula (V) $R^6$ is n-propoxy group and n is 4, a structure in which in the formula (V) $R^6$ is trifluoroethoxy group and n is 3 or 4, and a structure in which in the formula (V) $R^6$ is phenoxy group and n is 3 or 4.

58. An additive for a non-aqueous electrolyte of a primary cell comprising isomers of phosphazene derivatives represented by the following formulae (VI) and (VII):

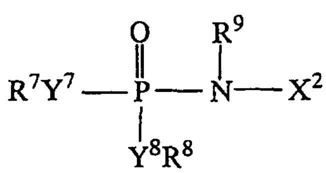

····· (VI)

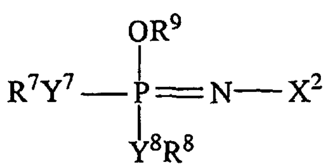

····· (VII)

(wherein $R^7$, $R^8$ and $R^9$ are independently a monovalent substituent or a halogen element, $X^2$ is a substituent

containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently a bivalent connecting group, a bivalent element or a single bond).

59. An additive for a non-aqueous electrolyte of a primary cell according to the item 58, which contains a phosphazene derivative represented by the formula (VII).

## BEST MODE FOR CARRYING OUT THE INVENTION

The invention will be described in detail below.

[Non-aqueous electrolyte primary cell]

The non-aqueous electrolyte primary cell according to the invention comprises a positive electrode, a negative electrode and a non-aqueous electrolyte and further includes the other members, if necessary.

- Positive electrode -

A material of the positive electrode is not particularly limited, and may be used by properly selecting from well-known positive electrode materials. For example, there are preferably mentioned graphite fluoride ($(CF_x)_n$), $MnO_2$ (may be obtained by an electrochemical synthesis or a chemical synthesis), $V_2O_5$, $MoO_3$, $Ag_2CrO_4$, CuO, CuS, $FeS_2$, $SO_2$, $SOCl_2$, $TiS_2$ and so on. Among them, $MnO_2$, $V_2O_5$ and graphite fluoride are preferable in view of high capacity, safety and discharge potential and an excellent wetting property of an electrolyte, while $MnO_2$ and $V_2O_5$ are more preferable in view of the cost. These materials may be used alone or in a combination of two or more.

In the positive electrode, an electricly conductive material and a binding material may be mixed, if necessary. As the electricly conductive material are mentioned acetylene black and the like, and as the binding material are mentioned polyvinylidene fluoride (PVDF), polytetrafluoroethylene (PTFE) and the like.

A shape of the positive electrode is not particularly limited, and may be properly selected from the well-known shapes as the electrode. For example, there are mentioned sheet, column, plate, spiral and the like.

- Negative electrode -

As a material of the negative electrode are mentioned, for example, lithium metal itself, lithium alloy and the like. As a metal forming the lithium alloy are mentioned Sn, Pb, Al, Au, Pt, In, Zn, Cd, Ag, Mg and so on. Among them, Al, Zn and Mg are preferable from a viewpoint of reserve and toxicity. These materials may be used alone or in a combination of two or more.

A shape of the negative electrode is not particularly limited, and may be properly selected from the well-known shapes similar to those of the positive electrode.

- Non-aqueous electrolyte -

In the first invention, the non-aqueous electrolyte comprises a support salt and a phosphazene derivative having a viscosity at 25°C of not more than 100 mPa·s (100 cP), and further contains the other components, if necessary.

In the second invention, the non-aqueous electrolyte comprises a support salt, a phosphazene derivative having a viscosity at 25°C of not more than 20 mPa·s (20 cP) and an aprotic organic solvent, and further contains the other components, if necessary.

In the third invention, the non-aqueous electrolyte comprises a support salt and a phosphazene derivative being solid at 25°C and represented by the following formula (V):

$$(NPR^6{}_2)_n \qquad (V)$$

(wherein $R^6$ is independently a monovalent substituent or a halogen element and n is 3 to 6), and further contains the other components, if necessary.

In the fourth invention, the non-aqueous electrolyte comprises a support salt and isomers of phosphazene derivatives represented by the following formulae (VI) and (VII):

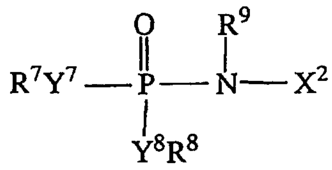

..... (VI)

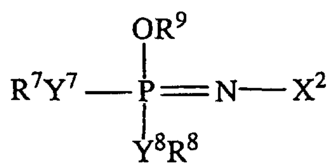

..... (VII)

(wherein $R^7$, $R^8$ and $R^9$ are independently a monovalent substituent or a halogen element, $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently a bivalent connecting group, a bivalent element or a single bond), and further contains the other components, if necessary.

- Support salt -

The support salt is sufficient to be usually used in the non-aqueous electrolyte of the primary cell, and is preferable to be an ion source of lithium ion or the like. The ion source of lithium ion is not particularly limited, and includes, for example, $LiClO_4$, $LiBF_4$, $LiPF_6$, $LiCF_3SO_3$, $LiAsF_6$, $LiC_4F_9SO_3$, $Li(CF_3SO_2)_2N$, $Li(C_2F_5SO_2)_2N$ and so on. They may be used alone or in a combination of two or more.

The content of the support salt in the non-aqueous electrolyte is preferably 0.2-1 mol, more preferably 0.5-1 mol per 1 liter of a solvent in the non-aqueous electrolyte. When the content is less than 0.2 mol, the sufficient conductivity of the non-aqueous electrolyte can not be ensured and troubles may be caused in the discharge characteristics of the cell, while when it exceeds 1 mol, the viscosity of the non-aqueous electrolyte rises and the sufficient mobility of the lithium ion or the like can not be ensured, so that the sufficient conductivity of the non-aqueous electrolyte can not be ensured likewise the above case and hence a solution resistance rises and troubles may be caused in the pulse discharge and low-temperature property.

- Phosphazene derivative and isomer of phosphazene derivative -

The reason why the non-aqueous electrolyte contains the phosphazene derivative and/or the isomer of the phosphazene derivative is as follows.

In the conventional non-aqueous electrolyte based on the aprotic organic solvent used in the non-aqueous electrolyte of the non-aqueous electrolyte primary cell, a risk is high because when a large current violently flows in short-circuiting or the like to abnormally generate heat in the cell, gas is generated by vaporization and decomposition or explosion-ignition of the cell are caused by the generated gas and heat. Also, there is a high risk of causing ignition-explosion when sparks produced in the short-circuiting take fire in the electrolyte.

On the other hand, if the phosphazene derivative or the isomer of the phosphazene derivative is included in the conventional non-aqueous electrolyte, the vaporization-decomposition or the like of the non-aqueous electrolyte at a relatively low temperature of not higher than about 200°C is suppressed to reduce the risk of fire-ignition. Even if the fire is caused in the inside of the cell by fusion of the negative electrode or the like, the risk of fire spreading is low. Further, phosphorus has an action of controlling a chaining decomposition of a polymer material constituting the cell, so that the risk of fire-ignition is effectively decreased. Moreover, when the phosphazene derivative or the isomer of the phosphazene derivative is included in the conventional non-aqueous electrolyte, it is possible to provide non-aqueous electrolyte primary cells having excellent cell performances such as discharge capacity, energy density and the like and further excellent low-temperature and high-temperature properties.

The phosphazene derivative and the isomer of the phosphazene derivative have potential windows sufficiently functioning as a primary cell and are not decomposed by discharge. Furthermore, an excellent self-extinguishing property or flame retardance is given to the non-aqueous electrolyte by the action of nitrogen gas or halogen gas or the like derived from the phosphazene derivative and the isomer of the phosphazene derivative, so that the safety becomes vary high in the non-aqueous electrolyte primary cell containing the non-aqueous electrolyte. Moreover, the phosphazene derivative and the isomer of the phosphazene derivative containing a halogen (e.g. fluorine) functions as a catching agent for an active radical in accidental combustion, and also the organic substituent has an oxygen shielding

effect because a carbide (char) is produced on an electrode material and a separator in the combustion. In addition, even if the cell is accidentally charged by the user, the phosphazene derivative and the isomer of the phosphazene derivative have an effect of suppressing the formation of dendrite, so that the safety becomes further higher as compared with the system having no derivative.

In the invention, the risk of fire-ignition is evaluated by the measurement of oxygen index according to JIS K7201. Moreover, the oxygen index means a value of minimum oxygen concentration represented by a volume percentage required for maintaining combustion of a material under given test conditions defined in JIS K7201, in which the lower the oxygen index, the higher the risk of fire-ignition, and the higher the oxygen index, the lower the risk of fire-ignition. In the invention, the risk of fire-ignition is evaluated by a limit oxygen index according to the above oxygen index.

In the primary cell according to the invention, it is preferable that the non-aqueous electrolyte and the additive for the non-aqueous electrolyte have a limit oxygen index of not less than 21% by volume, respectively. When the limit oxygen index is less than 21% by volume, the effect of controlling the fire-ignition may be insufficient. Since the oxygen index under atmospheric condition is 20.2% by volume, the limit oxygen index of 20.2% by volume means that combustion occurs in atmosphere. The inventors have made various studies and found that the self-extinguishing property is developed at the limit oxygen index of not less than 21% by volume, and the flame retardance is developed at not less than 23% by volume, and the incombustibility is developed at not less than 25% by volume. Moreover, the terms "self-extinguishing property, flame retardance, incombustibility" used herein are defined in the method according to UL 94HB method, wherein when a test piece of 127 mm x 12.7 mm is prepared by impregnating an electrolyte into an incombustible quartz fiber and is ignited under atmospheric environment, the self-extinguishing property indicates a case that the ignited flame is extinguished in a line between 25 mm and 100 mm and an object fallen down from a net is not fired, and the flame retardance indicates a case that the ignited flame does not arrive at a line of 25 mm of the apparatus and the object fallen down from the net is not fired, and the incombustibility indicates a case that no ignition is observed (combustion length: 0 mm).

Furthermore, the non-aqueous electrolyte containing an ester based organic solvent used in the conventional non-aqueous electrolyte primary cell and a support salt as a lithium ion source may take a case that the support salt is decomposed with the lapse of time and the decomposed mass reacts with a slight amount of water or the like existing in the organic solvent to lower the electric conductivity of the non-aqueous electrolyte or cause the deterioration of the electrode material. On the other hand, when the phosphazene derivative or an isomer of the phosphazene derivative is added to the conventional non-aqueous electrolyte, the decomposition of the support salt is suppressed and the stability of the non-aqueous electrolyte is considerably improved. In general, $LiBF_4$, $LiPF_6$, $LiCF_3SO_3$, $Li(C_2F_5SO_2)_2N$, $Li(CF_3SO_2)_2$ and the like are used as the support salt. Particularly, $LiCF_3SO_3$, $Li(C_2F_5SO_2)_2N$ and $Li(CF_3SO_2)_2$ are preferable because they are low in the hydrolytic ability of the support salt itself, but $LiBF_4$ and $LiPF_6$ may be preferably used by the above action of the phosphazene derivative or the isomer of the phosphazene derivative.

The phosphazene derivative and the isomer of the phosphazene derivative used in the invention is preferable to have a substituent containing a halogen element in its molecular structure. When the molecular structure has the substituent containing the halogen element, even if the content of the phosphazene derivative or the isomer of the phosphazene derivative is small, it is possible to more effectively reduce the risk of fire-ignition of the non-aqueous electrolyte by a halogen gas derived from the phosphazene derivative or the isomer of the phosphazene derivative. Moreover, the occurrence of a halogen radical comes into problem in the compound having the substituent containing the halogen element, but the phosphazene derivative and the isomer of the phosphazene derivative used in the invention do not cause the above problem because a phosphorus element in the molecular structure catches the halogen radical to form a stable phosphorus halogenide.

In the phosphazene derivative or the isomer of the phosphazene derivative, the content of the halogen element is preferably 2-80% by weight, more preferably 2-60% by weight, further preferably 2-50% by weight. When the content is less than 2% by weight, the effect by including the halogen element is not sufficiently developed, while when it exceeds 80% by weight, the viscosity becomes higher and hence the electric conductivity may lower in the addition to the electrolyte. As the halogen element are preferable fluorine, chlorine, bromine and the like. Among them, fluorine is particularly preferable from a viewpoint of obtaining good cell characteristics.

The flash point of the phosphazene derivative used in the invention is not particularly limited, but it is preferably not lower than 100°C, more preferably not lower than 150°C in view of the control of the fire-ignition or the like. The term "flash point" used herein concretely means a temperature that the flame is widened on a surface of a mass to cover at least 75% of the mass surface. The flash point is a measure observing a tendency of forming a combustible mixture with air. The electrolyte based on the aprotic organic solvent used in the conventional non-aqueous electrolyte is high in the risk that it is vaporized-decomposed to generate the gas or ignited to outblaze on the surface of the electrolyte when a large current violently flows in the short-circuiting or the like to abnormally generate heat in the cell since the material for the negative electrode (material including lithium) is low in the melting point (melting point of lithium metal: about 170°C). However, as the flash point is made not lower than 100°C, the ignition or the like is suppressed, or even if the ignition or the like is caused in the interior of the cell, it is possible to lower the risk of outblazing on the surface of the electrolyte.

In the first invention, the viscosity at 25°C of the phosphazene derivative is required to be not more than 100 mPa·s (100 cP) and is preferably not more than 20 mPa·s (20 cP). When the viscosity exceeds 100 mPa·s (100 cP), the support salt is hardly dissolved and the wettability to the material for the positive electrode, separator or the like lowers and hence the ionic conductivity is considerably reduced by the increase of the viscous resistance in the non-aqueous electrolyte and particularly the performances are lacking in the use under a lower temperature condition such as below freezing point or the like.

In the second invention are used the phosphazene derivative and the aprotic organic solvent together, in which the viscosity at 25°C of the phosphazene derivative is required to be not more than 20 mPa·s (20 cP) and is preferable not more than 10 mPa·s (10 cP). In the second invention, it is attempted to make lower the viscosity of the non-aqueous electrolyte owing to the co-use of the aprotic organic solvent, but when the viscosity exceeds 20 mPa·s (20 cP), the viscosity becomes higher even after the mixing with the aprotic organic solvent and it is difficult to attain the optimum ionic conductivity as the non-aqueous electrolyte primary cell.

Moreover, the viscosity is determined in the invention by using a viscosity-measuring meter (R-type viscometer Model RE500-S1, made by Toki Sangyo Co., Ltd.) and measuring a viscosity at a rotating velocity arriving at an indication value of 50-60% under analytical conditions that a rotating plate is rotated at each of 1 rpm, 2 rpm, 3 rpm, 5 rpm, 7 rpm, 10 rpm, 20 rpm and 50 rpm for 120 seconds.

As the phosphazene derivative used in the first and second inventions, it is required to be a liquid at room temperature (25°C) from a viewpoint of the ionic conductivity. As a technique of applying a phosphazene compound to a cell material, there has hitherto been known an example of a full solid type secondary cell using a polyphosphazene (methoxyethoxyethoxy polyphosphazene, oligoethyleneoxy polyphosphazene or the like) as a solid electrolyte. In this cell, the flame retardant effect can be fairly expected, but the ionic conductivity is as low as 1/1000-1/10000 in comparison with the usual liquid electrolyte, so that the use is limited to only an application at a restricted low discharge current. On the contrary, according to the first and second inventions, the electric conductivity is equal to that of the usual liquid electrolyte because the phosphazene derivative is liquid.

The phosphazene derivative used in the first and second inventions is not particularly limited and is preferable to be ones being relatively low in the viscosity and capable of well dissolving the support salt, which includes, for example, chain phosphazene derivatives represented by the following formula (I) or cyclic phosphazene derivatives represented by the following formula (II):

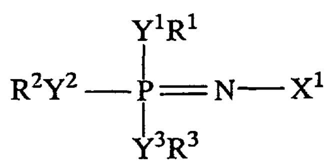

..... (I)

(wherein $R^1$, $R^2$ and $R^3$ are independently a monovalent substituent or a halogen element, $X^1$ is an organic group containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently a bivalent connecting group, a bivalent element or a single bond) or

$$(NPR^4{}_2)_n \qquad \text{(II)}$$

(wherein $R^4$ is a monovalent substituent or a halogen element, and n is 3 to 15).

In the formula (I), $R^1$, $R^2$ and $R^3$ are not particularly limited unless they are a monovalent substituent or a halogen element. As the monovalent substituent are mentioned an alkoxy group, an alkyl group, a carboxyl group, an acyl group, an aryl group and so on. As the halogen element are preferably mentioned fluorine, chlorine, bromine and so on. Among them, the alkoxy group is preferable in view that the viscosity of the non-aqueous electrolyte can be particularly made low. All of $R^1$-$R^3$ may be the same kind of the substituent, or some of them may be different kind of the substituents.

As the alkoxy group are mentioned, for example, methoxy group, ethoxy group, propoxy group, butoxy group, an alkoxy-substituted alkoxy group such as methoxyethoxy group or methoxyethoxyethoxy group, and so on. Among them, methoxy group, ethoxy group, methoxyethoxy group or methoxyethoxyethoxy group is preferable as all of $R^1$-$R^3$, and particularly methoxy group or ethoxy group is preferable as all of them from a viewpoint of low viscosity and

high dielectric constant. As the alkyl group are mentioned methyl group, ethyl group, propyl group, butyl group, pentyl group and so on. As the acyl group are mentioned formyl group, acetyl group, propionyl group, butylyl group, isobutylyl group, valeryl group and so on. As the aryl group are mentioned phenyl group, tolyl group, naphthyl group and so on. The hydrogen element in these monovalent substituents is preferable to be substituted with the halogen element as previously mentioned.

As the bivalent connecting group represented by $Y^1$, $Y^2$ and $Y^3$ of the formula (I) are mentioned, for example, $CH_2$ group and a bivalent connecting group containing at least one element selected from the group consisting of oxygen, sulfur, selenium, nitrogen, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group and the bivalent connecting group containing at least one element selected from the group consisting of oxygen, sulfur, selenium and nitrogen are preferable, and particularly the bivalent connecting group containing sulfur and/or selenium is preferable. Also, $Y^1$, $Y^2$ and $Y^3$ may be a bivalent element such as oxygen, sulfur, selenium or the like, or a single bond. All of $Y^1$-$Y^3$ may be the same kind of the substituent, or some of them may be different kind.

As $X^1$ in the formula (I) is preferable an organic group containing at least one element selected from the group consisting of carbon, silicon, nitrogen, oxygen and sulfur from a viewpoint of the care for toxicity, environment and the like. Among these organic groups, it is more preferable to be an organic group having a structure represented by the following formula (VIII), (IX) or (X).

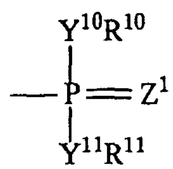

..... (VIII)

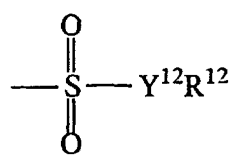

..... (IX)

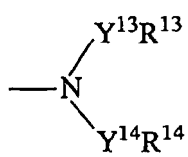

..... (X)

In the formulae (VIII), (IX) and (X), $R^{10}$-$R^{14}$ are a monovalent substituent or a halogen element, and $Y^{10}$-$Y^{14}$ are a bivalent connecting group, or a bivalent element or single bond, and $Z^1$ is a bivalent group or a bivalent element.

As $R^{10}$-$R^{14}$ in the formulae (VIII), (IX) and (X) are preferably mentioned the same monovalent substituents and halogen elements as described in $R^1$-$R^3$ of the formula (I). Also, they may be the same kind, or some of them may be different kinds from each other in the same organic group. $R^{10}$ and $R^{11}$ in the formula (VIII) or $R^{13}$ and $R^{14}$ in the formula (X) may be bonded to each other to form a ring.

As the group represented by $Y^{10}$-$Y^{14}$ in the formulae (VIII), (IX) and (X) are mentioned the same bivalent connecting groups, bivalent elements and the like as described in $Y^1$-$Y^3$ of the formula (I), and particularly the group containing sulfur and/or selenium is more preferable because the risk of fire-ignition in the non-aqueous electrolyte is reduced as previously mentioned. In the same organic group, they may be the same kind or some of them may be different kinds.

As $Z^1$ in the formula (VIII) are mentioned, for example, $CH_2$ group, CHR group (R is an alkyl group, an alkoxyl group, phenyl group or the like, and so forth), NR group and bivalent group containing at least one element selected from the group consisting of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$

group, CHR group, NR group and the bivalent group containing at least one element selected from the group consisting of oxygen, sulfur and selenium are preferable. Particularly, the bivalent group containing sulfur and/or selenium is preferable because the risk of fire-ignition in the non-aqueous electrolyte is reduced. Also, $Z^1$ may be a bivalent element such as oxygen, sulfur, selenium or the like.

As these organic groups, the organic group containing phosphorus as represented by the formula (VIII) is particularly preferable in view of a point that the risk of fire-ignition can be effectively reduced. Also, when the organic group is an organic group containing sulfur as represented by the formula (IX), it is particularly preferable in a point of making small the interfacial resistance of the non-aqueous electrolyte.

In the formula (II), $R^4$ is not particularly limited unless it is a monovalent substituent or a halogen element. As the monovalent substituent are mentioned an alkoxy group, an alkyl group, a carboxyl group, an acyl group, an aryl group and so on. As the halogen element are preferably mentioned, for example, fluorine, chlorine, bromine and so on. Among them, the alkoxy group is particularly preferable in a point that the viscosity of the non-aqueous electrolyte can be lowered. As the alkoxy group are mentioned, for example, methoxy group, ethoxy group, methoxyethoxy group, propoxy group, phenoxy group and so on. Among them, methoxy group, ethoxy group, methoxyethoxy group and phenoxy group are particularly preferable. It is preferable that hydrogen element in these monovalent substituents is substituted with a halogen element, particularly fluorine element as previously mentioned. As the group substituted with fluorine atom is mentioned, for example, trifluoroethoxy group or the like.

It is possible to synthesize phosphazene derivatives having a more preferable viscosity and a solubility suitable for adding and mixing by properly selecting $R^1$-$R^4$, $R^{10}$-$R^{14}$, $Y^1$-$Y^3$, $Y^{10}$-$Y^{14}$ and $Z^1$. These phosphazene derivatives may be used alone or in a combination of two or more.

In the first and second inventions, the content of the phosphazene derivative in the non-aqueous electrolyte is preferably 5-100% by volume, more preferably 10-50% by volume from a viewpoint of a limit oxygen index. The risk of fire-ignition of the non-aqueous electrolyte can be effectively reduced by adjusting the content to the above numerical range. Since this range differs in accordance with the kind of the support salt used and the kind of the electrolyte used though the risk of flash point is effectively reduced, the system used is concretely optimized by adequately determining the phosphazene content so as to make the viscosity to a smallest value and render the limit oxygen index into not less than 21% by volume.

The non-aqueous electrolyte primary cells according to the first and second inventions are low in the risk of fire-ignition and have excellent cell characteristics.

Among the phosphazene derivatives of the formula (II), a phosphazene derivative represented by the following formula (III) is particularly preferable from a viewpoint that the viscosity of the electrolyte is made low to improve the low-temperature characteristics of the cell and further improve the safety of the electrolyte:

$$(NPF_2)_n \qquad \text{(III)}$$

(wherein n is 3-13).

The phosphazene derivative represented by the formula (III) is a liquid of a low viscosity at room temperature (25°C) and has an action of lowering a solidification point. For this end, it is possible to give excellent low-temperature characteristics to the electrolyte by adding this phosphazene derivative to the electrolyte, and also the lowering of the viscosity in the electrolyte is attained and hence it is possible to provide a non-aqueous electrolyte primary cell having a low internal resistance and a high electric conductivity. Therefore, it is particularly possible to provide a non-aqueous electrolyte primary cell indicating excellent discharge characteristics over a long time even in the use under low-temperature conditions in a low-temperature area or season. Furthermore, the phosphazene derivative of the formula (III) contains fluorine, so that it functions as an agent for catching active radial in the event of combustion.

In the formula (III), n is preferably 3-4, more preferably 3 in a point that the excellent low-temperature characteristics can be given to the non-aqueous electrolyte and the viscosity of the non-aqueous electrolyte can be lowered. In case that n is a small value, the boiling point is low and the property of preventing the ignition in the flame contacting. On the other hand, as the value of n becomes large, the boiling point becomes high and the cell can be stably used even at a higher temperature. In order to obtain objective performances by utilizing the above nature, it is possible to properly select and use plural phosphazenes. By properly selecting the value of n in the formula (III) can be prepared an electrolyte having a more preferable viscosity, a solubility suitable for mixing, low-temperature characteristics and the like. These phosphazene derivatives may be sued alone or in a combination of two or more.

The viscosity of the phosphazene derivative represented by the formula (III) is not particularly limited unless it is not more than 20 mPa·s (20 cP), but it is preferably not more than 10 mPa·s (10 cP), more preferably not more than 5 mPa·s (5 cP) from a viewpoint of the improvements of the electric conductivity and the low-temperature characteristics.

The viscosity at 25°C of the non-aqueous electrolyte added with the phosphazene derivative of the formula (III) is preferably not more than 10 mPa·s (10 cP), more preferably not more than 5 mPa·s (5 cP), further preferably not more than 4.0 mPa·s (4.0 cP). When the viscosity of the non-aqueous electrolyte is not more than 10 mPa·s (10 cP), there is obtained a non-aqueous electrolyte primary cell having excellent cell characteristics such as low internal resistance, high electric conductivity and the like.

The electric conductivity of the non-aqueous electrolyte added with the phosphazene derivative of the formula (III) can be easily rendered into a preferable value by adjusting the viscosity of the non-aqueous electrolyte within the above preferable numerical range. The electric conductivity is preferably not less than 3.0 mS/cm, more preferably not less than 5.0 mS/cm as an electric conductivity in a solution of lithium salt having a concentration of 0.75 mol/L. When the electric conductivity is not less than 3.0 mS/cm, the sufficient electric conducting property of the non-aqueous electrolyte can be ensured and hence it is possible to control the internal resistance of the non-aqueous electrolyte primary cell to suppress potential drop in the discharge.

Moreover, the electric conductivity in the invention is a value obtained by the following measuring method. That is, it is measured by using an electric conductivity meter (trade name: CDM210 Model, made by Radio Meter Trading Co., Ltd.) under given conditions (temperature: 25°C, pressure: atmospheric pressure, water content: not more than 10 ppm) while applying a constant current of 5 mA to the non-aqueous electrolyte primary cell. Moreover, the electric conductivity can be theoretically determined as electric conductivity = G·K (S/cm) from a known cell constant (K) and a conductance (G) obtained by firstly measuring a conductance (Gm) of the non-aqueous electrolyte and removing an influence of a cable resistance (R) from this conductance to measure a conductance (G) of the electrolyte itself.

The phosphazene derivative represented by the formula (III) has not a flash point. Since the phosphazene derivative has no flash point, the ignition or the like is suppressed in the non-aqueous electrolyte containing the phosphazene derivative, or even if the ignition or the like is caused in the interior of the cell, it is possible to reduce the risk of outblazing on the surface of the electrolyte due to the ignition.

As a total content of the phosphazene derivatives represented by the formula (III) in the non-aqueous electrolyte, there are mentioned a first content capable of more preferably giving "low-temperature characteristics" to the non-aqueous electrolyte, a second content capable of preferably giving "resistance to deterioration" to the non-aqueous electrolyte, a third content capable of more preferably attaining "lowering of viscosity" in the non-aqueous electrolyte, and a fourth content capable of preferably giving "safety" to the non-aqueous electrolyte in accordance with the effects obtained by including the phosphazene derivatives.

From a viewpoint of "low-temperature characteristics", the first content of the phosphazene derivative represented by the formula (III) in the non-aqueous electrolyte is preferably not less than 1% by volume, more preferably not less than 3% by volume, further preferably not less than 5% by volume. When the content is less than 1% by volume, the solidification point of the non-aqueous electrolyte can not be lowered sufficiently and the low-temperature characteristics are insufficient. Moreover, the "low-temperature characteristics" in the invention are measured and evaluated by the following method. That is, a low-temperature discharge capacity is measured by conducting 0.2C discharge at a lower limit voltage of 1.5 V under an environment of -40°C. Then, a residual rate of discharge capacity is calculated by the following equation when the discharge capacity at such a low temperature is compared with a discharge capacity measured at 25°C. Such measurement and calculation are conducted with respect to three cells in total to find an average value, whereby are evaluated the low-temperature characteristics.

Equation: residual rate of discharge capacity = (discharge capacity at low temperature/discharge capacity at room temperature (25°C)) $\times$ 100 (%)

From a viewpoint of "resistance to deterioration", the second content of the phosphazene derivative represented by the formula (III) in the non-aqueous electrolyte is preferably not less than 2% by volume, more preferably 3-75% by volume. Also, the content is further preferably 5-75% by volume from a viewpoint of the highly establishment between the low-temperature characteristics and the resistance to deterioration. When the content is within the above numerical range, the deterioration can be favorably suppressed. Moreover, the "deterioration" in the invention means a decomposition of the support salt (e.g. lithium salt), and the effect of preventing the deterioration is evaluated by the following method for evaluation of stability.

(1) Firstly, a moisture content is measured after the preparation of a non-aqueous electrolyte containing the support salt. Then, a concentration of hydrogen fluoride is measured by a high-speed liquid chromatography (ion chromatography). Further, a color tone of the non-aqueous electrolyte is observed visually and thereafter a discharge capacity is calculated by the discharge test.

(2) After the non-aqueous electrolyte is left to stand in a globe box for 2 months, the moisture content and the concentration of hydrogen fluoride are again measured and the color tone is observed and the discharge capacity is calculated. The stability is evaluated by the change of these measured results.

From a viewpoint of "lowering of viscosity", the third content of the phosphazene derivative represented by the formula (III) in the non-aqueous electrolyte is preferably not less than 3% by volume, more preferably 3-80% by volume, further preferably 3-50% by volume. Also, the content is preferably 5-80% by volume, more preferably 3-50% by volume from a viewpoint of the highly establishment among the low-temperature characteristics, resistance to deterioration and lowering of viscosity. When the content is less than 3% by volume, the "lowering of viscosity" of the non-aqueous electrolyte can not be sufficiently attained. In general, the viscosity of propylene carbonate widely used as an electrolyte is 2.5 mPa·s (2.5 cP) and the viscosity of phosphazene having n=3 in the formula (III) is 0.8 mPa·s (0.8 cP), so that the viscosity becomes low as the amount of phosphazene added becomes large, which is preferable from a viewpoint of the improvements of the electric conductivity and the low-temperature characteristics. However, as the amount of phosphazene added becomes not less than 50% by volume, the solubility of the support salt becomes saturated and hence the rise of the viscosity in the electrolyte is undesirably caused.

From a viewpoint of "safety", the fourth content of the phosphazene derivative represented by the formula (III) in the non-aqueous electrolyte is preferably not less than 5% by volume. As the content of phosphazene becomes large, the safety becomes higher. By adjusting the content to not less than 5% by volume is rendered the limit oxygen index of the non-aqueous electrolyte into not less than 21% by volume, and hence the risk of fire-ignition is effectively reduced. Moreover, the "safety" in the invention can be evaluated by the measurement of the limit oxygen index used in the method of evaluating the risk of fire-ignition.

The internal resistance (Ω) of the primary cell containing the non-aqueous electrolyte added with the phosphazene derivative of the formula (III) can be easily made into a preferable value by adjusting the viscosity of the non-aqueous electrolyte within the above preferable numerical range. The internal resistance (Ω) is preferably 0.05-1 (Ω), more preferably 0.05-0.3 (Ω). Moreover, the internal resistance can be obtained by a well-known measuring method, for example, a method wherein an internal resistance R is calculated from a quantity of voltage drop (IR drop) when a pulse of a low current is applied.

The discharge capacity of the primary cell containing the non-aqueous electrolyte added with the phosphazene derivative of the formula (III) is preferably 260-285 (mAh/g), more preferably 275-280 (mAh/g) when an electrolytically synthesized manganese dioxide made by Toso Co., Ltd. is used as a positive electrode. Moreover, the discharge capacity is measured by conducting 0.2C discharge at a lower limit voltage of 1.5 V under an environment of 20°C.

The primary cell containing the non-aqueous electrolyte added with the phosphazene derivative of the formula (III) is excellent in the safety and the resistance to deterioration, low in the interfacial resistance of the non-aqueous electrolyte and low in the internal resistance and hence high in the electric conductivity and excellent in the low-temperature characteristics.

Among the phosphazene derivatives of the formula (II), a phosphazene derivative represented by the following formula (IV) is preferable from a viewpoint of the improvement of the resistance to deterioration and safety of the electrolyte:

$$(NPR^5{}_2)_n \qquad (IV)$$

(wherein $R^5$ is independently a monovalent substituent or fluorine and at least one of all $R^5$s is a fluorine-containing monovalent substituent or fluorine, and n is 3-8, provided that all of $R^5$s are not fluorine).

When the phosphazene derivative of the formula (II) is included, excellent self-extinguishing property or flame retardance can be a¥given to the non-aqueous electrolyte to improve the safety of the non-aqueous electrolyte, while when the phosphazene derivative of the formula (IV) in which at least one of all $R^5$s is a fluorine-containing monovalent substituent is included, it is possible to give more excellent safety to the non-aqueous electrolyte. Further, when the phosphazene derivative of the formula (IV) in which at least one of all $R^5$s is fluorine is included, it is possible to give further excellent safety. That is, the phosphazene derivative of the formula (IV) in which at least one of all $R^5$s is a fluorine-containing monovalent substituent or fluorine has an effect of more hardly combusting the non-aqueous electrolyte as compared with the phosphazene derivative containing no fluorine, and can give further excellent safety to the non-aqueous electrolyte. Moreover, the phosphazene derivative of the formula (II), in which all $R^4$s are fluorine and n is 3, is incombustible and is large in the effect of preventing ignition in the approaching of flame, but the boiling point thereof is vary low, so that if it is completely vaporized, the remaining aprotic organic solvent or the like burns out.

As the monovalent substituent in the formula (IV) are mentioned an alkoxy group, an alkyl group, an acyl

group, an aryl group, a carboxyl group and so on. The alkoxy group is preferable in a point that the improvement of the safety in the non-aqueous electrolyte is particularly excellent. As the alkoxy group are mentioned methoxy group, ethoxy group, n-propoxy group, i-propoxy group, butoxy group, phenoxy group as well as alkoxy group-substituted alkoxy group such as methoxyethoxy group or the like, and so on. Particularly, methoxy group, ethoxy group, n-propoxy group and phenoxy group are preferable in a point that the improvement of the safety in the non-aqueous electrolyte is excellent. Also, methoxy group is preferable in a point that the viscosity of the non-aqueous electrolyte is lowered. In the formula (IV), n is preferable to be 3-4 in a point that the excellent safety can be given to the non-aqueous electrolyte. The monovalent substituent is preferable to be substituted with fluorine. When all of $R^5$s in the formula (IV) are not fluorine, at least one monovalent substituent contains fluorine. As the monovalent substituent substituted with fluorine is mentioned trifluoroethoxy group.

The content of fluorine in the phosphazene derivative of the formula (IV) is preferably 3-70% by weight, more preferably 7-45% by weight. When the content is within the above numerical range, "excellent safety" can be preferably developed.

As the molecular structure of the phosphazene derivative represented by the formula (IV), a halogen element such as chlorine, bromine or the like may be included in addition to fluorine.

By properly selecting $R^5$ and n value in the formula (IV), it is possible to prepare an electrolyte having more preferable safety and viscosity, a solubility suitable for mixing and the like. These phosphazene derivatives may be used alone or in a combination of two or more.

The non-aqueous electrolyte added with the phosphazene derivative represented by the formula (IV) contains the phosphazene derivative of the formula (IV) capable of particularly giving an excellent safety among the phosphazene derivatives, so that the limit oxygen index is particularly high, and the limit oxygen index of the above non-aqueous electrolyte is preferably not less than 22% by volume.

The viscosity of the phosphazene derivative represented by the formula (IV) is not particularly limited unless it is not more than 20 mPa·s (20 cP), but it is preferably not more than 10 mPa·s (10 cP), more preferably not more than 5 mPa·s (5 cP) from a viewpoint of the improvement of electric conductivity and the improvement of low-temperature characteristics.

The viscosity at 25°C of the non-aqueous electrolyte added with the phosphazene derivative of the formula (IV) is preferably not more than 10 mPa·s (10 cP), more preferably not more than 5 mPa·s (5 cP). When the viscosity is not more than 10 mPa·s (10 cP), there is obtained a non-aqueous electrolyte primary cell having excellent cell characteristics such as low internal resistance, high electric conductivity and the like.

As the total content of the phosphazene derivative(s) represented by the formula (IV) in the non-aqueous electrolyte, there are mentioned a first content capable of preferably giving "resistance to deterioration" to the non-aqueous electrolyte and a second content capable of particularly giving an excellent "safety" to the non-aqueous electrolyte in accordance with the effect obtained by including the phosphazene derivative(s).

From a viewpoint of "resistance to deterioration", the first content of the phosphazene derivative of the formula (IV) in the non-aqueous electrolyte is preferably not less than 2% by volume, more preferably 2-75% by volume. When the content is within the above numerical range, the deterioration can be preferably suppressed.

From a viewpoint that "safety" is more preferably given to obtain a non-aqueous electrolyte primary cell having a very high safety, the second content of the phosphazene derivative of the formula (IV) in the non-aqueous electrolyte is preferably not less than 10% by volume, more preferably not less than 15% by volume. When the content is less than 10% by volume, the excellent "safety" can not be particularly given to the non-aqueous electrolyte. Also, the content is more preferably 10-75% by volume, further preferably 15-75% by volume from a viewpoint of the highly establishment between the safety and the resistance to deterioration. Moreover, when the amount of phosphazene added is not less than 50% by volume, the solubility of the support salt comes near to saturation and the viscosity of the electrolyte rises, so that in order to avoid the rise of the viscosity of the electrolyte, it is preferable to be less than 50% by volume.

From a viewpoint of "safety", a case of including a cyclic phosphazene derivative represented by the formula (IV), $LiBF_4$, γ-butyrolactone and/or propylene carbonate and a case of including a cyclic phosphazene derivative represented by the formula (IV), $LiCF_3SO_3$, γ-butyrolactone and/or propylene carbonate are particularly preferable as the non-aqueous electrolyte. In these cases, even when the content is small irrespectively of the above-mentioned description, the safety is very high. That is, the content of the cyclic phosphazene derivative of the formula (IV) in the non-aqueous electrolyte is preferable to be not less than 5% by volume in order to particularly develop the excellent safety.

The discharge capacity of the primary cell containing the non-aqueous electrolyte added with the phosphazene derivative of the formula (IV) is preferably 260-285 (mAh/g), more preferably 275-280 (mAh/g) when an electrolytically synthesized manganese dioxide made by Toso Co., Ltd. is used as a positive electrode. Moreover, the discharge capacity is measured by conducting 0.2C discharge at a lower limit voltage of 1.5 V under an environment of 20°C.

The primary cell containing the non-aqueous electrolyte added with the phosphazene derivative of the formula (IV) is excellent in the resistance to deterioration, low in the interfacial resistance of the non-aqueous electrolyte, excellent in the low-temperature characteristics and very high in the safety.

The phosphazene derivative used in the third invention is a phosphazene derivative being solid at 25°C and represented by the formula (V).

Since the phosphazene derivative of the formula (V) is solid at room temperature (25°C), when it is added to the non-aqueous electrolyte, it is dissolved in the non-aqueous electrolyte to raise the viscosity of the electrolyte. However, when the addition amount is a given value as mentioned later, the rising rate of the viscosity of the electrolyte becomes low to provide a non-aqueous electrolyte primary cell having a low internal resistance and a high electric conductivity. In addition, since the phosphazene derivative of the formula (V) is dissolved in the non-aqueous electrolyte, the stability of the electrolyte is excellent over a long time. On the other hand, when the addition amount exceeds a given value, the viscosity of the non-aqueous electrolyte becomes considerably large and the internal resistance is high and the electric conductivity becomes low, so that the use as the non-aqueous electrolyte primary cell is impossible.

In the formula (V), $R^6$ is not particularly limited unless it is a monovalent substituent or a halogen element. As the monovalent substituent are mentioned an alkoxy group, an alkyl group, a carboxyl group, an acyl group, an aryl group and so on. As the halogen element are preferably mentioned halogen elements such as fluorine, chlorine, bromine, iodine and the like. Among them, the alkoxy group is particularly preferable in a point that the rise of the viscosity of the non-aqueous electrolyte can be suppressed. As the alkoxy group are preferable methoxy group, ethoxy group, methoxyethoxy group, propoxy group (isopropoxy group, n-propoxy group), phenoxy group, trifluoroethoxy group and so on. In a point that the rise of the viscosity of the non-aqueous electrolyte can be suppressed, methoxy group, ethoxy group, propoxy group (isopropoxy group, n-propoxy group), phenoxy group and trifluoroethoxy group are more preferable. Also, the monovalent substituent is preferable to contain the aforementioned halogen element.

In the formula (V), n is particularly preferable to be 3 or 4 in a point that the rise of the viscosity of the non-aqueous electrolyte can be suppressed.

Among the phosphazene derivatives represented by the formula (V), a structure that $R^6$ in the formula (V) is methoxy group and n is 3, a structure that $R^6$ in the formula (V) is either methoxy group or phenoxy group and n is 4, a structure that $R^6$ in the formula (V) is ethoxy group and n is 4, a structure that $R^6$ in the formula (V) is isopropoxy group and n is 3 or 4, a structure that $R^6$ in the formula (V) is n-propoxy group and n is 4, a structure that $R^6$ in the formula (V) is trifluoroethoxy group and n is 3 or 4, and a structure that $R^6$ in the formula (V) is phenoxy group and n is 3 or 4 are particularly preferable in a point that the rise of the viscosity of the non-aqueous electrolyte can be suppressed.

By properly selecting each substituent and n value in the formula (V), it is possible to prepare a non-aqueous electrolyte having a more preferable viscosity, a solubility suitable for mixing and the like. The phosphazene derivatives may be used alone or in a combination of two or more.

In the non-aqueous electrolyte added with the phosphazene derivative of the formula (V), the limit oxygen index is preferable to be not less than 21% by volume from a viewpoint of the self-extinguishing property, and is preferable to be not less than 23% by volume from a viewpoint of the flame retardance.

The viscosity at 25°C of the non-aqueous electrolyte added with the phosphazene derivative of the formula (V) is preferably not more than 10 mPa·s (10 cP), more preferably not more than 5 mPa·s (5 cP). When the viscosity is not more than 10 mPa·s (10 cP), there is provided a non-aqueous electrolyte primary cell having excellent cell characteristics such as low internal resistance, high electric conductivity and the like.

The electric conductivity of the non-aqueous electrolyte added with the phosphazene derivative of the formula (V) can be easily rendered into a preferable value by adjusting the viscosity of the non-aqueous electrolyte within the above preferable numerical range. The electric conductivity is preferably not less than 3.0 mS/cm, more preferably not less than 5.0 mS/cm as an electric conductivity in a solution of lithium salt having a concentration of 0.75 mol/L. When the electric conductivity is not less than 3.0 mS/cm, the sufficient electric conductivity of the non-aqueous electrolyte can be ensured, so that it is possible to suppress the internal resistance of the non-aqueous electrolyte primary cell and control the voltage drop in the discharge.

As the content of the phosphazene derivative represented by the formula (V) in the non-aqueous electrolyte, there are mentioned a first content capable of "suppressing rise of viscosity" in the non-aqueous electrolyte, a second content capable of preferably giving "resistance to deterioration" to the non-aqueous electrolyte, a third content capable of preferably giving "self-extinguishing property" to the non-aqueous electrolyte, and a fourth content capable of preferably giving "flame retardance" to the non-aqueous electrolyte.

From a viewpoint of "suppressing rise of viscosity", the first content of the phosphazene derivative of the formula (V) in the non-aqueous electrolyte is preferably not more than 40% by weight, more preferably not more than 35% by weight, further preferably not more than 30% by weight. When the content exceeds 40% by weight, the rise of viscosity in the non-aqueous electrolyte becomes considerably large and the internal resistance becomes high and the electric conductivity becomes low.

From a viewpoint of "resistance to deterioration", the second content of the phosphazene derivative of the formula (V) in the non-aqueous electrolyte is preferable to be not less than 2% by weight. When the content is within the above numerical range, the deterioration can be preferably suppressed.

From a viewpoint of "self-extinguishing property", the third content of the phosphazene derivative of the formula (V) in the non-aqueous electrolyte is preferable to be not less than 20% by weight, and from a viewpoint of the highly establishment between the self-extinguishing property and the suppressing of viscosity rise, it is preferably 20-40% by weight, more preferably 20-35% by weight, further preferably 20-30% by weight. When the content is less than 20% by weight, the sufficient "self-extinguishing property" may not be developed in the non-aqueous electrolyte.

From a viewpoint of "flame retardance", the fourth content of the phosphazene derivative of the formula (V) in the non-aqueous electrolyte is preferable to be not less than 30% by weight, and from a viewpoint of the highly establishment between the flame retardance and the suppressing of viscosity rise, it is more preferably 30-40% by weight, further preferably 30-35% by weight. When the content is not less than 30% by weight, it is possible to develop the sufficient "flame retardance" in the non-aqueous electrolyte. Moreover, the "self-extinguishing property" and "flame retardance" in the invention can be evaluated by the measurement of limit oxygen index used in the above method of evaluating the risk of fire-ignition.

From a view point of "self-extinguishing property or flame retardance", a case of including a phosphazene derivative represented by the formula (V), $LiBF_4$, γ-butyrolactone and/or propylene carbonate, and a case of including a phosphazene derivative represented by the formula (V), $LiCF_3SO_3$, γ-butyrolactone and/or propylene carbonate are particularly preferable as the non-aqueous electrolyte. These cases have an excellent effect of self-extinguishing property or flame retardance even if the content is small irrespectively of the above description. That is, in the case of including a phosphazene derivative represented by the formula (V), $LiBF_4$, γ-butyrolactone and/or propylene carbonate, the content of the phosphazene derivative in the non-aqueous electrolyte is preferable to be 5-10% by weight for developing the self-extinguishing property, and is preferable to be more than 10% by weight for developing the flame retardance, and is preferably more than 10% by weight but not more than 40% by weight, more preferably more than 10% by weight but not more than 35% by weight, further preferably more than 10% by weight but not more than 30% by weight from a viewpoint of the highly establishment between the flame retardance and the suppressing of viscosity rise. Also, in the case of including a phosphazene derivative represented by the formula (V), $LiCF_3SO_3$, γ-butyrolactone and/or propylene carbonate, the content of the phosphazene derivative in the non-aqueous electrolyte is preferable to be 5-25% by weight for developing the self-extinguishing property, and is preferable to be more than 25% by weight for developing the flame retardance, and is preferably more than 25% by weight but not more than 40% by weight, more preferably more than 25% by weight but not more than 35% by weight, further preferably more than 25% by weight but not more than 30% by weight from a viewpoint of the highly establishment between the flame retardance and the suppressing of viscosity rise.

The internal resistance (Ω) of the primary cell containing the non-aqueous electrolyte added with the phosphazene derivative of the formula (V) can be easily rendered into a preferable value by adjusting the viscosity of the non-aqueous electrolyte within the above preferable numerical range. The internal resistance (Ω) is preferably 0.05-1 (Ω), more preferably 0.05-0.3 (Ω). Moreover, the internal resistance can be obtained by a well-known measuring method, for example, a method wherein an internal resistance R is calculated from a quantity of voltage drop (IR drop) when a pulse of a low current is applied.

The discharge capacity of the primary cell containing the non-aqueous electrolyte added with the phosphazene derivative of the formula (V) is preferably 260-285 (mAh/g), more preferably 275-280 (mAh/g) when an electrolytically synthesized manganese dioxide made by Toso Co., Ltd. is used as a positive electrode. Moreover, the discharge capacity is measured by conducting 0.2C discharge at a lower limit voltage of 1.5 V under an environment of 20°C.

The primary cell containing the non-aqueous electrolyte added with the phosphazene derivative of the formula (V) is excellent in the self-extinguishing property or flame retardance, excellent in the resistance to deterioration, low in the interfacial resistance of the non-aqueous electrolyte, excellent in the low-temperature characteristics, low in the internal resistance, high in the electric conductivity and excellent in the long-time stability.

The isomer of the phosphazene derivative used in the fourth invention is represented by the formula (VI) and is an isomer of a phosphazene derivative represented by the formula (VII).

When the isomer represented by the formula (VI) and of the phosphazene derivative represented by the formula (VII) is added to the non-aqueous electrolyte, the very excellent low-temperature characteristics can be developed in the non-aqueous electrolyte.

In the formula (VI), $R^7$, $R^8$ and $R^9$ are not particularly limited unless they are monovalent substituent or halogen element. As the monovalent substituent are mentioned an alkoxy group, an alkyl group, a carboxyl group, an acyl group, an aryl group and so on. As the halogen element are preferably mentioned halogen elements such as fluorine, chlorine, bromine and the like. Among them, fluorine and alkoxy group are particularly preferable in view of the low-temperature characteristics and electrochemical stability of the non-aqueous electrolyte. Also, fluorine, alkoxy group

and fluorine-containing alkoxy group are preferable in view of the lowering of viscosity of the non-aqueous electrolyte. All of $R^7$-$R^9$ may be the same kind of the substituent, or some of them may be different kind of substituents.

As the alkoxy group are mentioned, for example, methoxy group, ethoxy group, propoxy group, butoxy group, alkoxy-substituted alkoxy group such as methoxyethoxy group, methoxyethoxyethoxy group or the like, and so on. Among them, all of $R^7$-$R^9$ are preferable to be methoxy group, ethoxy group, methoxyethoxy group or methoxyethoxyethoxy group, and all of them are particularly preferable to be methoxy group or ethoxy group from a viewpoint of a low viscosity and high dielectric constant. As the alkyl group are mentioned methyl group, ethyl group, propyl group, butyl group, pentyl group and so on. As the acyl group are mentioned formyl group, acetyl group, propionyl group, butylyl group, isobutylyl group, valeryl group and so on. As the aryl group are mentioned phenyl group, tolyl group, naphthyl group and so on. In these monovalent substituents, hydrogen element is preferable to be substituted with halogen element. As the halogen element are preferably mentioned fluorine, chlorine, bromine and so on.

As the bivalent connecting group represented by $Y^7$ and $Y^8$ in the formula (VI) are mentioned, for example, $CH_2$ group, and a bivalent connecting group containing at least one element selected from the group consisting of oxygen, sulfur, selenium, nitrogen, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group and the bivalent connecting group containing at least one element selected from the group consisting of oxygen, sulfur, selenium and nitrogen are preferable. Also, $Y^7$ and $Y^8$ may be bivalent element such as oxygen, sulfur, selenium or the like, or a single bond. Particularly, the bivalent connecting group containing sulfur and/or selenium, oxygen element and sulfur element are preferable in a point that the flame retardance of the non-aqueous electrolyte is improved, while the bivalent connecting group containing an oxygen element, and oxygen element are preferable in a point that the low-temperature characteristics of the non-aqueous electrolyte are excellent. $Y^7$ and $Y^8$ may be the same kind or different kind from each other.

As $X^2$ in the formula (VI) is preferable an organic group containing at least one element selected from the group consisting of carbon, silicon, nitrogen, phosphorus, oxygen and sulfur from a viewpoint of the care for toxicity, environment and the like. It is more preferable to be a substituent having a structure represented by the following formula (XI), (XII) or (XIII).

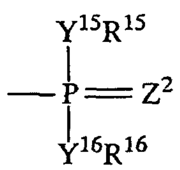

..... (XI)

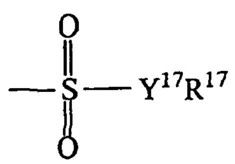

..... (XII)

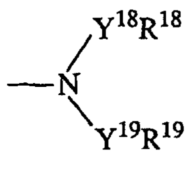

..... (XIII)

In the formulae (XI), (XII) and (XIII), $R^{15}$-$R^{19}$ are independently a monovalent substituent or a halogen element, and $Y^{15}$-$Y^{19}$ are independently a bivalent connecting group, or a bivalent element or single bond, and $Z^2$ is a bivalent group or a bivalent element.

As $R^{15}$-$R^{19}$ in the formulae (XI), (XII) and (XIII) are preferably mentioned the same monovalent substituents and halogen elements as described in $R^7$-$R^9$ of the formula (VI). Also, they may be the same kind, or some of them may be different kinds from each other in the same group. $R^{15}$ and $R^{16}$ in the formula (XI) or $R^{18}$ and $R^{19}$ in the formula

(XIII) may be bonded to each other to form a ring.

As the group represented by $Y^{15}$-$Y^{19}$ in the formulae (XI), (XII) and (XIII) are mentioned the same bivalent connecting groups, bivalent elements and the like as described in $Y^7$-$Y^8$ of the formula (VI), and particularly the bivalent connecting group containing sulfur and/or selenium, oxygen element or sulfur element is preferable for improving the flame retardance of the non-aqueous electrolyte. Also, the bivalent connecting group containing oxygen and oxygen element are particularly preferable in a point that the low-temperature characteristics of the non-aqueous electrolyte are excellent. In the same substituent, they may be the same kind or some of them may be different kinds.

As $Z^2$ in the formula (XI) are mentioned, for example, $CH_2$ group, CHR' group (R' is an alkyl group, an alkoxyl group, phenyl group or the like, and so forth), NR' group and a bivalent group containing at least one element selected from the group consisting of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group, CHR' group, NR' group and the bivalent group containing at least one element selected from the group consisting of oxygen, sulfur and selenium are preferable. Also, $Z^2$ may be a bivalent element such as oxygen, sulfur, selenium or the like. Particularly, the bivalent group containing sulfur and/or selenium, sulfur element or selenium element is preferable for improving the flame retardance of the non-aqueous electrolyte. Also, the bivalent group containing oxygen and oxygen element are particularly preferable in a point that the low-temperature characteristics of the non-aqueous electrolyte are excellent.

As these substituents, the substituent containing phosphorus as represented by the formula (XI) is particularly preferable in a point that the self-extinguishing property or flame retardance can be effectively developed. Further, when $Z^2$, $Y^{15}$ and $Y^{16}$ in the formula (XI) are oxygen element, it is particularly possible to develop the very excellent low-temperature characteristics in the non-aqueous electrolyte. Also, when the substituent is a sulfur-containing substituent as represented by the formula (XII), it is particularly preferable in a point of making small the interfacial resistance of the non-aqueous electrolyte.

By properly selecting $R^7$-$R^9$, $R^{15}$-$R^{19}$, $Y^7$-$Y^8$, $Y^{15}$-$Y^{19}$ and $Z^2$ in the formulae (VI) and (XI)-(XIII), it is possible to prepare a non-aqueous electrolyte having a more preferable viscosity, a solubility suitable for adding and mixing, low-temperature characteristics and the like. These compounds may be used alone or in a combination of two or more.

The isomer represented by the formula (VI) is an isomer of the phosphazene derivative represented by the formula (VII), which can be produced, for example, by adjusting a vacuum degree and/or temperature in the production of the phosphazene derivative represented by the formula (VII). The content of the isomer in the non-aqueous electrolyte (volume %) can be measured by the following measuring method. That is, it can be measured by finding a peak area of a sample through gel permeation chromatography (GPC) or high-speed liquid chromatography (HPLC) and comparing this peak area with the area of the isomer previously found per mol to obtain a molar ratio and further considering a specific gravity to convert into a volume.

As the phosphazene derivative represented by the formula (VII), it is preferable to be ones being relatively low in the viscosity and capable of well dissolving the support salt. As $R^7$-$R^9$, $Y^7$-$Y^8$ and $X^2$ of the formula (VII) are preferably mentioned all of the same as described in the explanation on $R^7$-$R^9$, $Y^7$-$Y^8$ and $X^2$ of the formula (VI).

In the non-aqueous electrolyte added with the compound of the formula (VI), the limit oxygen index is preferable to be not less than 21% by volume from a viewpoint of the self-extinguishing property, and the limit oxygen index is preferable to be not less than 23% by volume from a viewpoint of the flame retardance.

The viscosity at 25°C of the non-aqueous electrolyte added with the isomer of the formula (VI) is preferably not more than 10 mPa·s (10 cP), more preferably not more than 5 mPa·s (5 cP). When the viscosity is not more than 10 mPa·s (10 cP), there is provided a non-aqueous electrolyte primary cell having excellent cell characteristics such as low internal resistance, high electric conductivity and the like.

As a total content of the isomer represented by the formula (VI) and of the phosphazene derivative of the formula (VII) and the phosphazene derivative represented by t he formula (VII) in the non-aqueous electrolyte, there are mentioned a first content capable of more preferably giving "low-temperature characteristics" to the non-aqueous electrolyte, a second content capable of preferably giving "resistance to deterioration" to the non-aqueous electrolyte, a third content capable of preferably giving "self-extinguishing property" to the non-aqueous electrolyte, and a fourth content capable of preferably giving "flame retardance" to the non-aqueous electrolyte in accordance with the effects obtained by including the isomer of the formula (VI) and the phosphazene derivative of the formula (VII).

From a viewpoint of "low-temperature characteristics", the first content of the isomer of the formula (VI) and the phosphazene derivative of the formula (VII) in the non-aqueous electrolyte is preferably not less than 1% by volume, more preferably not less than 2% by volume, further preferably not less than 5% by volume. When the content is less than 1% by volume, the low-temperature characteristics of the non-aqueous electrolyte are not sufficient.

From a viewpoint of "resistance to deterioration", the second content of the isomer of the formula (VI) and the phosphazene derivative of the formula (VII) in the non-aqueous electrolyte is preferably not less than 2% by volume, more preferably 3-75% by volume. From a viewpoint of the highly establishment between the resistance to deterioration

and the low-temperature characteristics, it is further preferably 5-75% by volume. When the content is within the above numerical range, the deterioration can be preferably suppressed.

From a viewpoint of "self-extinguishing property", the third content of the isomer of the formula (VI) and the phosphazene derivative of the formula (VII) in the non-aqueous electrolyte is preferably not less than 20% by volume. When the content is less than 20% by volume, the sufficient "self-extinguishing property" can not be developed in the non-aqueous electrolyte.

From a viewpoint of "flame retardance", the fourth content of the isomer of the formula (VI) and the phosphazene derivative of the formula (VII) in the non-aqueous electrolyte is preferably not less than 30% by volume. When the content is not less than 30% by volume, it is possible to sufficiently develop the "flame retardance" in the non-aqueous electrolyte.

From a viewpoint of "self-extinguishing property or flame retardance", a case of including the isomer of the formula (VI) and the phosphazene derivative of the formula (VII), $LiBF_4$ and not less than 45% by volume of γ-butyrolactone and/or propylene carbonate, and a case of including the isomer of the formula (VI) and the phosphazene derivative of the formula (VII), $LiCF_3SO_3$ and not less than 45% by volume of γ-butyrolactone and/or propylene carbonate are particularly preferable as the non-aqueous electrolyte. These cases have an excellent effect of self-extinguishing property or flame retardance even if the content of the isomer of the formula (VI) and the phosphazene derivative of the formula (VII) in the non-aqueous electrolyte is small irrespectively of the above description. That is, in the case including the isomer of the formula (VI) and the phosphazene derivative of the formula (VII), $LiBF_4$ and not less than 45% by volume of γ-butyrolactone and/or propylene carbonate, the total content of the isomer of the formula (VI) and the phosphazene derivative of the formula (VII) in the non-aqueous electrolyte is preferable to be 1.5-10% by volume for developing the self-extinguishing property, and is preferable to be more than 10% by volume for developing the flame retardance. Also, in the case including the isomer of the formula (VI) and the phosphazene derivative of the formula (VII), $LiCF_3SO_3$ and not less than 45% by volume of γ-butyrolactone and/or propylene carbonate, the total content of the isomer of the formula (VI) and the phosphazene derivative of the formula (VII) in the non-aqueous electrolyte is preferable to be 2.5-15% by volume for developing the self-extinguishing property, and is preferable to be more than 15% by volume for developing the flame retardance.

The internal resistance (Ω) of the primary cell provided with the non-aqueous electrolyte containing at least the isomer of formula (VI) can be easily rendered into a preferable value by adjusting the viscosity of the non-aqueous electrolyte within the above preferable numerical range. The internal resistance (Ω) is preferably 0.05-1 (Ω), more preferably 0.05-0.3 (Ω). Moreover, the internal resistance can be obtained by a well-known measuring method, for example, a method wherein an internal resistance R is calculated from a quantity of voltage drop (IR drop) when a pulse of a low current is applied.

The discharge capacity of the primary cell provided with the non-aqueous electrolyte containing at least the isomer of the formula (VI) is preferably 260-285 (mAh/g), more preferably 275-280 (mAh/g) when an electrolytically synthesized manganese dioxide made by Toso Co., Ltd. is used as a positive electrode. Moreover, the discharge capacity is measured by conducting 0.2C discharge at a lower limit voltage of 1.5 V under an environment of 20°C.

The primary cell provided with the non-aqueous electrolyte containing at least the isomer of the formula (VI) is excellent in the self-extinguishing property or flame retardance, excellent in the resistance to deterioration, low in the interfacial resistance of the non-aqueous electrolyte and excellent in the low-temperature characteristics.

-- Aprotic organic solvent (other components) --

Although a solvent having an active proton is considered as the solvent, it violently reacts with the material of the negative electrode as previously mentioned, so that such a solvent can not be used and hence the aprotic organic solvent is used. When the aprotic organic solvent is included in the non-aqueous electrolyte, the aprotic organic solvent does not react with the material of the negative electrode, so that the safety is high and it is possible to make low the viscosity of the non-aqueous electrolyte and an optimum ionic conductivity is easily attained as a non-aqueous electrolyte primary cell. In the conventional manganese dioxide-lithium cell, however, the reaction between manganese dioxide and carbonate based electrolyte occurs at about 65°C and an internal pressure of the cell is raised by a gas produced with such a reaction, so that there is a problem in the safety. On the contrary, in the non-aqueous electrolyte containing the phosphazene derivative and/or the isomer of the phosphazene derivative, the above reaction of the electrolyte is suppressed, and the storing property even at a high temperature of 120°C is good and the discharge under the high temperature is also good.

Since the aprotic organic solvent can easily lower the viscosity of the non-aqueous electrolyte, the viscosity at 25°C of the solvent is preferably not more than 10 mPa·s (10 cP), more preferably not more than 5 mPa·s (5 cP). In the second invention, however, the viscosity at 25°C of the aprotic organic solvent is preferably not more than 3.0 mPa·s (3.0 cP), more preferably not more than 2.0 mPa·s (2.0 cP). If the viscosity exceeds 3.0 mPa·s (3.0 cP), the effect by co-using the aprotic organic solvent and the phosphazene derivative may not be developed in the second

invention.

The aprotic organic solvent is not particularly limited, but ether compounds and ester compounds are mentioned in a point that the viscosity of the non-aqueous electrolyte is made low. Concretely, there are mentioned 1,2-dimethoxy ethane (DME), tetrahydrofuran, dimethyl carbonate, diethyl carbonate, diphenyl carbonate, ethylene carbonate, propylene carbonate (PC), γ-butyrolactone (GBL), γ-valerolactone, methylethyl carbonate, ethylmethyl carbonate and so on. Among them, cyclic ester compound such as propylene carbonate, γ-butyrolactone or the like, chain ester compound such as dimethyl carbonate, methylethyl carbonate or the like, and chain ether compound such as 1,2-dimethoxy ethane or the like are preferable. Particularly, the cyclic ester compound is preferable in a point that the dielectric constant is high and the solubility for lithium salt or the like is excellent, and the chain ester compound and ether compound are preferable in a point that the viscosity is low and the viscosity of the non-aqueous electrolyte is made low. They may be used alone or in a combination of two or more.

The above aprotic organic solvent is preferable as the other component in the first, third and fourth inventions.

- Other members -

As the other member are preferably mentioned a separator interposed between the positive and negative electrodes so as to prevent short-circuiting of current due to the contact of both electrodes in the non-aqueous electrolyte primary cell, well-known members usually used in the cell and so on.

The material of the separator is a material capable of surely preventing the contact of both electrodes and passing or keeping the electrolyte, which preferably includes non-woven fabrics, thin-layer films and the like made of a synthetic resin such as polytetrafuloroethylene, polypropylene, polyethylene, cellulose, polybutylene terephthalate, polyethylene terephthalate or the like. Among them, microporous film made of polypropylene or polyethylene having a thickness of about 20-50 μm is particularly preferable. Moreover, in case of using at a high temperature, cellulose based or polybutylene terephthalate separator is preferable.

- Form of non-aqueous electrolyte primary cell -

The form of the non-aqueous electrolyte primary cell according to the invention is not particularly limited and preferably includes various well-known forms such as coin type, button type, paper type, cylindrical type cell of rectangular or spiral structure and so on. In case of the spiral structure, the non-aqueous electrolyte primary cell can be produced by preparing a sheet-shaped positive electrode, sandwiching between collectors, piling a negative electrode (sheet-shaped) thereon and winding up them or the like. In case of the button type, the non-aqueous electrolyte primary cell can be produced by preparing sheet-shaped positive and negative electrodes, and sandwiching a separator between the positive and negative electrodes and the like.

[Additive for non-aqueous electrolyte of primary cell]

The additive for the non-aqueous electrolyte of the primary cell according to the invention is characterized by comprising a phosphazene derivative represented by either of the formula (I), formula (II) and formula (III), or having at least an isomer represented by the formula (VI) and of a phosphazene derivative represented by the formula (VII).

The additive for the non-aqueous electrolyte of the primary cell comprising the phosphazene derivative represented by either of the formulae (I) and (II) is relatively low in the viscosity and can well dissolve the support salt and can reduce the risk of fire-ignition. Also, the additive for the non-aqueous electrolyte of the primary cell comprising the phosphazene derivative represented by either of the formulae (I) and (II) is preferable to have a limit oxygen index of not less than 21% by volume. If the limit oxygen index is less than 21% by volume, the effect of suppressing the fire-ignition may be insufficient.

As the phosphazene derivative of the formula (II) is preferable a phosphazene derivative represented by the formula (III) from a viewpoint that the viscosity of the electrolyte is made low to improve the low-temperature characteristics of the cell and further improve the safety of the electrolyte. By adding the additive for the non-aqueous electrolyte of the primary cell comprising the phosphazene derivative represented by the formula (III) to the non-aqueous electrolyte primary cell can be prepared the non-aqueous electrolyte primary cell maintaining the cell characteristics required as the cell, and being excellent in the safety and the resistance to deterioration, low in the interfacial resistance of the non-aqueous electrolyte, low in the internal resistance and high in the electric conductivity and having excellent low-temperature characteristics.

As the phosphazene derivative of the formula (II) is preferable a phosphazene derivative represented by the formula (IV) from a viewpoint that the resistance to deterioration and the safety of the electrolyte are improved. By adding the additive for the non-aqueous electrolyte of the primary cell comprising the phosphazene derivative of the formula (IV) to the non-aqueous electrolyte primary cell can be prepared the non-aqueous electrolyte primary cell

maintaining the cell characteristics required as the cell, and being excellent in the resistance to deterioration and low in the interfacial resistance of the non-aqueous electrolyte, excellent in the low-temperature characteristics and very high in the safety. Among the phosphazene derivatives represented by the formula (IV), it is more preferable to be ones wherein at least one of all $R^5$s is fluorine and the monovalent substituent is alkoxy group, and particularly the alkoxy group is preferable to be any of methoxy group, ethoxy group and phenoxy group. Also, the fluorine-containing monovalent substituent is preferable to be trifluoroethoxy group.

By adding the additive for the non-aqueous electrolyte of the primary cell comprising the phosphazene derivative of the formula (V) to the non-aqueous electrolyte primary cell can be prepared the non-aqueous electrolyte primary cell maintaining the cell characteristics required as the cell, and being excellent in the self-extinguishing property or flame retardance, excellent in the resistance to deterioration and low in the interfacial resistance of the non-aqueous electrolyte, excellent in the low-temperature characteristics, low in the internal resistance, high in the electric conductivity and excellent in the long-time stability. Among the phosphazene derivatives represented by the formula (V), a structure that $R^6$ in the formula (V) is methoxy group and n is 3, a structure that $R^6$ in the formula (V) is either methoxy group or phenoxy group and n is 4, a structure that $R^6$ in the formula (V) is ethoxy group and n is 4, a structure that $R^6$ in the formula (V) is isopropoxy group and n is 3 or 4, a structure that $R^6$ in the formula (V) is n-propoxy group and n is 4, a structure that $R^6$ in the formula (V) is trifluoroethoxy group and n is 3 or 4, and a structure that $R^6$ in the formula (V) is phenoxy group and n is 3 or 4 are particularly preferable in a point that the rise of the viscosity of the non-aqueous electrolyte can be suppressed.

By adding the additive for the non-aqueous electrolyte of the primary cell containing the isomer represented by the formula (VI) and of the phosphazene derivative represented by the formula (VII) to the non-aqueous electrolyte primary cell can be prepared the non-aqueous electrolyte primary cell maintaining the cell characteristics required as the cell, and being excellent in the self-extinguishing property or flame retardance, excellent in the resistance to deterioration and low in the interfacial resistance of the non-aqueous electrolyte and excellent in the low-temperature characteristics. Moreover, the additive for the non-aqueous electrolyte of the primary cell containing the isomer represented by the formula (VI) and of the phosphazene derivative represented by the formula (VII) may contain the phosphazene derivative represented by the formula (VII).

The addition amount of the additive for the non-aqueous electrolyte of the primary cell according to the invention is preferable to be an amount corresponding to the aforementioned preferable numerical range of the content of the phosphazene derivative in the non-aqueous electrolyte of the non-aqueous electrolyte primary cell. By adjusting the addition amount within the value of the above numerical range can be preferably given the effects of the invention such as safety, self-extinguishing property, flame retardance, resistance to deterioration, viscosity lowering, low-temperature characteristics of the non-aqueous electrolyte and the like.

The invention is concretely described with reference to the examples and comparative examples, but the invention is not limited to the following examples. Moreover, the "viscosity" in the examples means a viscosity at 25°C and is a value measured by the well-known measuring method.

(Example 1)

[Preparation of non-aqueous electrolyte]

A non-aqueous electrolyte is prepared by dissolving $LiCF_3SO_3$ (lithium salt) at a concentration of 0.75 mol/L (M) into a mixed solution of 10% by volume of a phosphazene derivative A (a chain phosphazene derivative compound of the formula (I) in which $Y^1$-$Y^3$ are O (oxygen), $R^1$-$R^3$ are $CH_2CF_3$ and $X^1$ is $P(O)(OCH_2CF_3)_2$, viscosity at 25°C: 18.9 mPa·s (18.9 cP)), 45% by volume of propylene carbonate (PC) and 45% by volume of dimethoxyethane (DME).

[Preparation of non-aqueous electrolyte primary cell]

As a positive electrode is used a disc-shaped electrode (ϕ 16 mm) including 20 mg of electrochemically synthesized manganese dioxide made by Toso Co., Ltd., 12.5 mg of acetylene black as an electrically conductive material and 1.2 mg of vinylidene polyfluoride (PVDF) as a binding material. Moreover, the positive electrode is prepared by applying a kneaded mass of the positive electrode mixed material having the above compounding recipe with a doctor blade, drying in hot air (100-120°C) and punching out in a ϕ 16 mm punching machine. As a corrector is used a nickel foil. On the other hand, a lithium foil (thickness: 0.5 mm) punched in ϕ 16 mm is used as a negative electrode.

A size of a cell used in evaluation is 2016 type. As a separator is used a polyethylene separator made by Tonen-Sha Co., Ltd. The positive and negative electrodes are opposed to each other through the separator and the non-aqueous electrolyte is poured and then sealed to prepare a lithium primary cell. Moreover, a cellulose separator made by Nippon Kodo Kami Kogyo Co., Ltd. is used for an electrolyte having a bad wettability to the polyethylene separator made by Tonen-Sha Co., Ltd.

<Measurement-evaluation of cell characteristics>

With respect to the above prepared cells are measured and evaluated initial cell characteristics (voltage, internal resistance) at 20°C, and thereafter average discharge potential, discharge capacity at room temperature, energy density, low-temperature characteristics, and high-temperature characteristics are measured and evaluated by the following evaluation methods. These results are shown in Table 1.

- Evaluation of average discharge potential-

In a discharge curve obtained by discharging on the positive electrode material under a condition of 0.2C, a potential when a flat portion is maintained in the curve is an average discharge potential.

- Evaluation of discharge capacity at room temperature-

The discharge capacity is measured by conducting 0.2C discharge at a lower limit voltage of 1.5 V under an environment of 20°C.

- Evaluation of energy density-

The energy density is determined by calculating a discharge capacity per unit weight from the aforementioned discharge capacity at room temperature.

- Evaluation of low-temperature discharge characteristic (measurement of low-temperature discharge capacity)-

With respect to the obtained cells is carried out the discharge under the same conditions as in the "evaluation of discharge capacity at room temperature" except that the temperature in the discharge is a low temperature (-40°C). Then, a residual rate of discharge capacity is calculated by the following equation when the discharge capacity at such a low temperature is compared with a discharge capacity measured at 25°C. Such measurement and calculation are conducted with respect to three cells in total to find an average value, whereby are evaluated the low-temperature discharge characteristic.

Equation: residual rate of discharge capacity = (discharge capacity at low temperature/discharge capacity at room temperature (25°C)) × 100 (%)

- Evaluation of high-temperature characteristics (measurement of high-temperature discharge capacity)-

With respect to the obtained cells is carried out the discharge under the same conditions as in the "evaluation of discharge capacity at room temperature" except that the temperature in the discharge is a high temperature (120°C). Then, a residual rate of discharge capacity is calculated by the following equation when the discharge capacity at such a high temperature is compared with a discharge capacity measured at 25°C. Such measurement and calculation are conducted with respect to three cells in total to find an average value, whereby are evaluated the high-temperature discharge characteristic.

Equation: residual rate of discharge capacity = (discharge capacity at high temperature/discharge capacity at room temperature (25°C)) × 100 (%)

<Measurement of limit oxygen index>

With respect to the above obtained non-aqueous electrolytes is measured the limit oxygen index according to JIS K7201. A test specimen is prepared by reinforcing $SiO_2$ sheet (quartz filtering paper, incombustibility) of 127 mm × 12.7 mm with a U-shaped aluminum foil so as to be self-sustainable and impregnating 1.0 mL of the above non-aqueous electrolyte into the $SiO_2$ sheet. This test specimen is attached to a support member for the test specimen so as to locate at a distance of not less than 100 mm vertically from an upper end part of a combustion cylinder (inner diameter: 75 mm, height: 450 mm, equally filled with glass particles of 4 mm in diameter from the bottom to a thickness

of 100±5 mm and placed a metal net thereon). Then, the test specimen is ignited in air (heat source: Class 1, No. 1 of JIS K2240) to examine a combustion state while flowing oxygen (equal to or more than JIS K1101) and nitrogen (equal to or more than grade 2 of JIS K1107) into the combustion cylinder. In this case, a total flowing amount in the combustion cylinder is 11.4 L/min. This test is repeated 3 times, and an average value thereof is shown in Table 1.

Moreover, the oxygen index means a value of a minimum oxygen concentration represented by volume percentage required when the combustion of the material is maintained under given test conditions defined in JIS K7201. The limit oxygen index according to the invention is calculated from a minimum oxygen flowing amount required when the combustion of the test specimen is continued for a combusting time of not less than 3 minutes or the combustion after the ignition is continued at a combustion length of not less than 50 mm and a nitrogen flowing amount at this time.

Equation: Limit oxygen index = [oxygen flowing amount]/([oxygen flowing amount]+[nitrogen flowing amount]) $\times$ 100 (volume%)

(Example 2)

A non-aqueous electrolyte is prepared in the same manner as in Example 1 except that a phosphazene derivative B (chain phosphazene derivative compound of the formula (I) wherein $Y^1$-$Y^3$ are O (oxygen), $R^1$-$R^3$ are $CF_2CF_3$ and $X^1$ is $P(O)(OCF_2CF_3)_2$, viscosity at 25°C: 16.8 mPa·s (16.8 cP)) is used instead of the phosphazene derivative A in "Preparation of non-aqueous electrolyte" of Example 1, and then a non-aqueous electrolyte primary cell is prepared to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 3)

A non-aqueous electrolyte is prepared in the same manner as in Example 1 except that a phosphazene derivative C (chain phosphazene derivative compound of the formula (I) wherein $Y^1$-$Y^3$ are O (oxygen), $R^1$-$R^3$ are $CF_2CF_3$ and $X^1$ is $P(O)(OCH_2CH_3)_2$, viscosity at 25°C: 11.4 mPa·s (11.4 cP)) is used instead of the phosphazene derivative A in "Preparation of non-aqueous electrolyte" of Example 1, and then a non-aqueous electrolyte primary cell is prepared to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 4)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of the phosphazene derivative C and 90% by volume of $\gamma$-butyrolactone (GBL) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 5)

A non-aqueous electrolyte is prepared in the same manner as in Example 1 except that a phosphazene derivative D (cyclic phosphazene derivative compound of the formula (II) wherein n is 3 and $R^4$ is ethoxy group, viscosity at 25°C: 17.5 mPa·s (17.5 cP)) is used instead of the phosphazene derivative A in "Preparation of non-aqueous electrolyte" of Example 1, and then a non-aqueous electrolyte primary cell is prepared to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 6)

A non-aqueous electrolyte is prepared in the same manner as in Example 1 except that a phosphazene derivative E (chain EO type phosphazene derivative (compound of the formula (I) wherein $X^1$ is an organic group represented by the formula (VIII), all of $Y^1$-$Y^3$ and $Y^{10}$-$Y^{11}$ are single bond, all of $R^1$-$R^3$ and $R^{10}$-$R^{11}$ are ethoxy group and $Z^1$ is oxygen), viscosity at 25°C: 5.8 mPa·s (5.8 cP)) is used instead of the phosphazene derivative A in "Preparation of non-aqueous electrolyte" of Example 1, and then a non-aqueous electrolyte primary cell is prepared to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 7)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into the phosphazene derivative E without using an aprotic organic solvent to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 8)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative F (cyclic phosphazene derivative compound of the formula (II) wherein n is 3 and one of $6R^4$s is trifluoroethoxy group and the remaining 5 are fluorine, viscosity at 25°C: 1.8 mPa · s (1.8 cP)) and 90% by volume of γ-butyrolactone (GBL) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 9)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative G (cyclic phosphazene derivative compound of the formula (II) wherein n is 3 and two of $6R^4$s are trifluoroethoxy group ($CF_3CH_2O$-) and the remaining 4 are fluorine, viscosity at 25°C: 3.3 mPa·s (3.3 cP)) and 90% by volume of γ-butyrolactone (GBL) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Example 10)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative H (cyclic phosphazene derivative compound of the formula (II) wherein n is 3 and one of $6R^4$s is phenoxy group (PhO-) and the remaining 5 are fluorine, viscosity at 25°C: 1.7 mPa·s (1.7 cP)) and 90% by volume of γ-butyrolactone (GBL) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Comparative Example 1)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a phosphazene derivative I (compound of the formula (II) wherein n is 3-5 and $R^4$ is - $OCH_2CF_2CF_2CF_2CF_3$ group, viscosity at 25°C: 400 mPa·s (400 cP)) without using an aprotic organic solvent to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Comparative Example 2)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into 100% by volume of propylene carbonate (PC) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Comparative Example 3)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into 100% by volume of dimethoxyethane (DME) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Comparative Example 4)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 50% by volume of propylene carbonate (PC) and 50% by volume of dimethoxyethane (DME) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

(Comparative Example 5)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into 100% by volume of γ-butyrolactone (GBL) to measure the initial cell characteristics (voltage, internal resistance), average discharge potential, discharge capacity at room temperature, energy density, low-temperature characteristics and high-temperature characteristics, respectively, and further the oxygen index is measured in the same manner as in Example 1 by using this non-aqueous electrolyte. The results are shown in Table 1.

Table 1

| | Aprotic organic solvent | Phosphazene compound | Initial electric potential (V) | Internal resistance (Ω) | Average discharge potential (V) | Discharge capacity at room temperature (mAh/g) | Energy density (Wh/kg) | Residual rate of discharge capacity (%) | | Limit oxygen index (volume %) |
|---|---|---|---|---|---|---|---|---|---|---|
| | | | | | | | | low-temperature characteristic | high-temperature characteristic | |
| Example 1 | PC/DME=1/1 | phosphazene derivative A | 3.46 | 0.09 | 2.90 | 283 | 746 | 25 | 115 | 21.2 |
| Example 2 | PC/DME=1/1 | phosphazene derivative B | 3.47 | 0.09 | 2.90 | 285 | 753 | 26 | 114 | 21.9 |
| Example 3 | PC/DME=1/1 | phosphazene derivative C | 3.46 | 0.09 | 2.90 | 285 | 752 | 26 | 114 | 21.6 |
| Example 4 | GBL | phosphazene derivative C | 3.43 | 0.09 | 2.90 | 283 | 744 | 24 | 115 | 21.2 |
| Example 5 | PC/DME=1/1 | phosphazene derivative D | 3.44 | 0.09 | 2.90 | 285 | 750 | 25 | 113 | 21.0 |
| Example 6 | PC/DME=1/1 | phosphazene derivative E | 3.46 | 0.10 | 2.90 | 285 | 749 | 25 | 116 | 21.1 |
| Example 7 | none | phosphazene derivative E | 3.39 | 0.12 | 2.85 | 270 | 711 | 12 | 112 | 23.1 |
| Example 8 | GBL | phosphazene derivative F | 3.40 | 0.09 | 2.90 | 285 | 751 | 26 | 116 | 22.4 |
| Example 9 | GBL | phosphazene derivative G | 3.47 | 0.11 | 2.90 | 283 | 745 | 24 | 116 | 22.8 |
| Example 10 | GBL | phosphazene derivative H | 3.39 | 0.09 | 2.90 | 285 | 750 | 26 | 116 | 22.8 |
| Comparative Example 1 | none | phosphazene derivative I | 3.27 | 0.15 | 2.75 | 260 | 678 | 5 | 104 | 25.4 |
| Comparative Example 2 | PC | none | 3.45 | 0.11 | 2.88 | 275 | 720 | 10 | 100 | 17.5 |
| Comparative Example 3 | DME | none | 3.43 | 0.10 | 2.88 | 275 | 720 | 8 | 98 | 11.0 |
| Comparative Example 4 | PC/DME=1/1 | none | 3.48 | 0.19 | 2.90 | 278 | 728 | 10 | 108 | 15.4 |
| Comparative Example 5 | GBL | none | 3.48 | 0.10 | 2.90 | 278 | 729 | 10 | 100 | 17.1 |

As seen from Table 1, the oxygen index is raised or the non-aqueous electrolyte is hardly fired by adding the phosphazene derivative to the aprotic organic solvent having a low oxygen index. Also, in case of Comparative Example 1, although the oxygen index is high, the viscosity is high and the cell characteristics are poor. Further, it is understood from Example 1 to Example 10 that the non-aqueous electrolyte primary cell using the non-aqueous electrolyte according to the invention is high in the oxygen index (i.e. the ignition hardly occurs and the safety is high) and excellent in the characteristics as a primary cell.

(Example 11)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative J (cyclic phosphazene derivative compound of the formula (III) wherein n is 3, viscosity at 25°C: 0.8 mPa·s (0.8 cP)), 45% by volume of propylene carbonate (PC) and 45% by volume of dimethoxyethane (DME) to measure the initial cell characteristics (voltage, internal resistance), average discharge potential, discharge capacity at room temperature, energy density, low-temperature characteristics and high-temperature characteristics, respectively. Also, the oxygen index is measured in the same manner as in Example 1 by using this non-aqueous electrolyte, and further the electric conductivity and viscosity are measured by the aforementioned methods and the deterioration of the electrolyte is evaluated by the following method. The results are shown in Tables 2 and 3.

<Evaluation of deterioration>

With respect to the non-aqueous electrolyte, the evaluation of the deterioration is carried out by measuring and calculating water content (ppm), hydrogen fluoride concentration (ppm) and discharge capacity (mAh/g) just after the preparation of the non-aqueous electrolyte and after being left to stand in a globe box for 2 months in the same manner as in the aforementioned evaluation method of the stability. In this case, the discharge capacity (mAh/g) is determined by using the positive electrode or negative electrode having a known weight and conducting 0.2C discharge at a lower limit voltage of 1.5 V to obtain a discharge curve and dividing the obtained discharge quantity by the weight of the positive electrode or negative electrode used. Also, the change of color in the non-aqueous electrolyte just after the preparation of the non-aqueous electrolyte and after being left to stand in a globe box for 2 months is observed visually. The results are shown in Table 3.

(Example 12)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of the phosphazene derivative J and 90% by volume of γ-butyrolactone (GBL) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 2 and 3.

(Example 13)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of the phosphazene derivative J and 90% by volume of propylene carbonate (PC) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 2 and 3.

(Example 14)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed

solution of 10% by volume of the phosphazene derivative J and 90% by volume of dimethoxyethane (DME) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 2 and 3.

(Comparative Example 6)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative K (cyclic phosphazene derivative compound of the formula (III) in which n is 3 and all Fs (fluorine) of the formula (III) are substituted with methoxyethoxyethoxyethoxyethoxy group, viscosity at 25°C: 69 mPa·s (69 cP)), 45% by volume of propylene carbonate (PC) and 45% by volume of dimethoxyethane (DME) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 2 and 3.

(Comparative Examples 2-5)

The electric conductivity and viscosity of the non-aqueous electrolytes prepared in Comparative Examples 2-5 are measured and further the deteriorations of these non-aqueous electrolytes are evaluated in the same manner as in Example 11. The results are shown in Table 3. For the comparison, the cell characteristics of the non-aqueous electrolyte primary cells of Comparative Examples 2-5 in Table 1 are also shown in Table 2.

Table 2

| | Aprotic organic solvent | Phosphazene compound | Initial electric potential (V) | Internal resistance (Ω) | Average discharge potential (V) | Discharge capacity at room temperature (mAh/g) | Energy density (Wh/kg) | Residual rate of discharge capacity (%) | | Limit oxygen index (volume %) |
|---|---|---|---|---|---|---|---|---|---|---|
| | | | | | | | | low-temperature characteristic | high-temperature characteristic | |
| Example 11 | PC/DME=1/1 | phosphazene derivative J | 3.49 | 0.11 | 3.02 | 281 | 812 | 41 | 143 | 22.3 |
| Example 12 | GBL | phosphazene derivative J | 3.49 | 0.10 | 3.00 | 280 | 804 | 59 | 151 | 22.6 |
| Example 13 | PC | phosphazene derivative J | 3.47 | 0.15 | 2.95 | 279 | 791 | 49 | 140 | 22.7 |
| Example 14 | DME | phosphazene derivative J | 3.49 | 0.09 | 3.00 | 280 | 806 | 35 | 122 | 21.3 |
| Comparative Example 6 | PC/DME=1/1 | phosphazene derivative K | 3.20 | 0.32 | 2.65 | 237 | 512 | 3 | 130 | 20.2 |
| Comparative Example 2 | PC | none | 3.45 | 0.11 | 2.88 | 275 | 720 | 10 | 100 | 17.5 |
| Comparative Example 3 | DME | none | 3.43 | 0.10 | 2.88 | 275 | 720 | 8 | 98 | 11.0 |
| Comparative Example 4 | PC/DME=1/1 | none | 3.48 | 0.19 | 2.90 | 278 | 728 | 10 | 108 | 15.4 |
| Comparative Example 5 | GBL | none | 3.48 | 0.10 | 2.90 | 278 | 729 | 10 | 100 | 17.1 |

Table 3

| | Aprotic organic solvent | Phosphazene compound | Electric conductivity (mS/cm) | Viscosity (mPa·s) | Evaluation of deterioration | | | | | | | |
|---|---|---|---|---|---|---|---|---|---|---|---|---|
| | | | | | initial | | | after being left for 2 months | | | Change of color tone | Evaluation |
| | | | | | discharge capacity (mAh/g) | HF concen-tration (ppm) | water content (ppm) | discharge capacity (mAh/g) | HF concen-tration (ppm) | water content (ppm) | | |
| Example 11 | PC/DME=1/1 | phosphazene derivative J | 5.31 | 1.7 | 280 | 1 | 2 | 281 | 1 | 2 | none | stable |
| Example 12 | GBL | phosphazene derivative J | 5.26 | 2.3 | 280 | 1 | 2 | 280 | 1 | 2 | none | stable |
| Example 13 | PC | phosphazene derivative J | 5.13 | 3.4 | 277 | 2 | 1 | 276 | 2 | 1 | none | stable |
| Example 14 | DME | phosphazene derivative J | 4.83 | 0.9 | 281 | 1 | 2 | 280 | 1 | 2 | none | stable |
| Comparative Example 6 | PC/DME=1/1 | phosphazene derivative K | 2.34 | 10.2 | 233 | 1 | 1 | 234 | 1 | 1 | none | stable |
| Comparative Example 2 | PC | none | 5.12 | 3.7 | 277 | 1 | 2 | 275 | 1 | 2 | light yellow | slightly unstable |
| Comparative Example 3 | DME | none | 4.76 | 0.9 | 276 | 1 | 2 | 276 | 1 | 2 | none | stable |
| Comparative Example 4 | PC/DME=1/1 | none | 5.34 | 1.8 | 275 | 1 | 2 | 273 | 1 | 2 | light yellow | slightly unstable |
| Comparative Example 5 | GBL | none | 5.28 | 2.5 | 276 | 1 | 2 | 275 | 1 | 2 | light yellow | slightly unstable |

As seen from Table 2, the oxygen index is raised or the safety of the non-aqueous electrolyte is improved by adding the phosphazene derivative to the aprotic organic solvent of Comparative examples 2-5 having a low oxygen index (corresponding to Examples 11-14).

Also, as seen from Table 2, the non-aqueous electrolyte primary cells of the present invention are excellent in the discharge capacity and energy density, low in the viscosity and excellent in the residual rate of discharge capacity at low temperature, and very excellent in the characteristics as a primary cell. Particularly, the non-aqueous electrolytes of Examples 11-14 are very excellent in the low-temperature characteristics because the viscosity is lower than that of the non-aqueous electrolyte of Comparative Example 6. From these facts, it is clear that the phosphazene used in the invention is particularly excellent in the lowering of the viscosity among the phosphazenes and can provide the excellent low-temperature characteristics.

Further, as seen from Table 3, the decomposition of the lithium salt proceeds in Comparative Examples 2, 4 and 5 because the color tone of the electrolyte changes into light yellow after being left for 2 months. On the other hand, Examples 11-13 do not cause the change of color tone in the electrolyte and control the decomposition of the lithium salt and improve the resistance to deterioration.

(Example 15)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative L (cyclic phosphazene derivative compound of the formula (IV) in which n is 3 and two of $6R^5$s are ethoxy group and four thereof are fluorine, viscosity at 25°C: 1.2 mPa·s (1.2 cP)), 45% by volume of propylene carbonate (PC) and 45% by volume of dimethoxyethane (DME) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Example 16)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative L and 90% by volume of γ-butyrolactone (GBL) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Example 17)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative L and 90% by volume of propylene carbonate (PC) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Example 18)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative M (cyclic phosphazene derivative compound of the formula (IV) in which n is 3 and one of $6R^5$s is n-propoxy group and five thereof are fluorine, viscosity at 25°C: 1.1 mPa·s (1.1 cP)) and 90% by volume of γ-butyrolactone (GBL) to measure the initial cell characteristics (voltage, internal resistance), average discharge potential, discharge capacity at room temperature, energy density, low-temperature characteristics

and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Example 19)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative N (cyclic phosphazene derivative compound of the formula (IV) in which n is 3 and three of $6R^5$s are methoxy group and three thereof are fluorine, viscosity at 25°C: 3.9 mPa·s (3.9 cP)) and 90% by volume of γ-butyrolactone (GBL) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Example 20)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 15% by volume of a phosphazene derivative F (cyclic phosphazene derivative compound of the formula (IV) in which n is 3 and one of $6R^5$s is trifluoroethoxy group ($CF_3CH_2O$-) and five thereof are fluorine, viscosity at 25°C: 1.8 mPa·s (1.8 cP)) and 85% by volume of γ-butyrolactone (GBL) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Example 21)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 15% by volume of a phosphazene derivative G (cyclic phosphazene derivative compound of the formula (IV) in which n is 3 and two of $6R^5$s are trifluoroethoxy group ($CF_3CH_2O$-)and four thereof are fluorine, viscosity at 25°C: 3.3 mPa·s (3.3 cP)) and 85% by volume of γ-butyrolactone (GBL) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Example 22)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 15% by volume of a phosphazene derivative H (cyclic phosphazene derivative compound of the formula (IV) in which n is 3 and one of $6R^5$s is phenoxy group (PhO-) and five thereof are fluorine, viscosity at 25°C: 1.7 mPa·s (1.7 cP)) and 85% by volume of γ-butyrolactone (GBL) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Comparative Example 7)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solution of 10% by volume of a phosphazene derivative K (cyclic phosphazene derivative compound of the formula (IV) in which n is 3 and all of $6R^5$s are methoxyethoxyethoxyethoxyethoxy group, viscosity at 25°C: 69 mPa·s (69 cP))

and 90% by volume of γ-butyrolactone (GBL) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 4 and 5.

(Comparative Examples 2-5)

For the comparison, the cell characteristics of the non-aqueous electrolyte primary cells of Comparative Examples 2-5 in Table 2 are also shown in Table 4, and the viscosities and resistances to deterioration of the non-aqueous electrolytes of Comparative Examples 2-5 in Table 3 are also shown in Table 5.

Table 4

| | Aprotic organic solvent | Phosphazene compound | Initial electric potential (V) | Internal resistance (Ω) | Average discharge potential (V) | Discharge capacity at room temperature (mAh/g) | Energy density (Wh/kg) | Residual rate of discharge capacity (%) | | Limit oxygen index (volume %) | Evaluation |
|---|---|---|---|---|---|---|---|---|---|---|---|
| | | | | | | | | low-temperature characteristic | high-temperature characteristic | | |
| Example 15 | PC/DME=1/1 | phosphazene derivative L | 3.48 | 0.12 | 3.00 | 281 | 811 | 44 | 145 | 22.0 | self-extinguishing property |
| Example 16 | GBL | phosphazene derivative L | 3.47 | 0.13 | 3.00 | 280 | 806 | 47 | 144 | 25.1 | flame retardance |
| Example 17 | PC | phosphazene derivative L | 3.46 | 0.13 | 2.95 | 280 | 800 | 43 | 148 | 25.0 | flame retardance |
| Example 18 | GBL | phosphazene derivative M | 3.47 | 0.13 | 3.00 | 280 | 808 | 46 | 143 | 25.2 | flame retardance |
| Example 19 | GBL | phosphazene derivative N | 3.47 | 0.14 | 3.00 | 278 | 810 | 39 | 131 | 22.3 | self-extinguishing property |
| Example 20 | GBL | phosphazene derivative F | 3.40 | 0.09 | 3.00 | 279 | 810 | 40 | 149 | 22.4 | flame retardance |
| Example 21 | GBL | phosphazene derivative G | 3.47 | 0.11 | 3.00 | 275 | 801 | 39 | 142 | 22.8 | flame retardance |
| Example 22 | GBL | phosphazene derivative H | 3.39 | 0.09 | 3.00 | 280 | 812 | 45 | 148 | 22.8 | flame retardance |
| Comparative Example 7 | GBL | phosphazene derivative K | 3.22 | 0.30 | 2.70 | 239 | 522 | 3 | 120 | 20.2 | combustibility |
| Comparative Example 2 | PC | none | 3.45 | 0.11 | 2.88 | 275 | 720 | 10 | 100 | 17.5 | combustibility |
| Comparative Example 3 | DME | none | 3.43 | 0.10 | 2.88 | 275 | 720 | 8 | 98 | 11.0 | combustibility |
| Comparative Example 4 | PC/DME=1/1 | none | 3.48 | 0.19 | 2.90 | 278 | 728 | 10 | 108 | 15.4 | combustibility |
| Comparative Example 5 | GBL | none | 3.48 | 0.10 | 2.90 | 278 | 729 | 10 | 100 | 17.1 | combustibility |

Table 5

| | Aprotic organic solvent | Phosphazene compound | Viscosity (mPa·s) | Evaluation of deterioration | | | | | | | |
|---|---|---|---|---|---|---|---|---|---|---|---|
| | | | | initial | | | after being left for 2 months | | | Change of color tone | Evaluation |
| | | | | discharge capacity (mAh/g) | HF concen-tration (ppm) | water content (ppm) | discharge capacity (mAh/g) | HF concen-tration (ppm) | water content (ppm) | | |
| Example 15 | PC/DME=1/1 | phosphazene derivative L | 1.6 | 280 | 1 | 1 | 280 | 1 | 1 | none | stable |
| Example 16 | GBL | phosphazene derivative L | 1.8 | 280 | 1 | 1 | 281 | 1 | 1 | none | stable |
| Example 17 | PC | phosphazene derivative L | 1.9 | 279 | 1 | 2 | 279 | 1 | 2 | none | stable |
| Example 18 | GBL | phosphazene derivative M | 1.3 | 280 | 1 | 2 | 280 | 1 | 2 | none | stable |
| Example 19 | GBL | phosphazene derivative N | 1.8 | 277 | 1 | 1 | 278 | 1 | 1 | none | stable |
| Example 20 | GBL | phosphazene derivative F | 1.7 | 280 | 1 | 1 | 280 | 1 | 1 | none | stable |
| Example 21 | GBL | phosphazene derivative G | 1.9 | 278 | 1 | 3 | 278 | 1 | 2 | none | stable |
| Example 22 | GBL | phosphazene derivative H | 1.7 | 280 | 1 | 1 | 280 | 1 | 1 | none | stable |
| Comparative Example 7 | GBL | phosphazene derivative K | 9.9 | 240 | 1 | 1 | 238 | 1 | 1 | none | stable |
| Comparative Example 2 | PC | none | 3.7 | 277 | 1 | 2 | 275 | 1 | 2 | light yellow | slightly unstable |
| Comparative Example 3 | DME | none | 0.9 | 276 | 1 | 2 | 276 | 1 | 2 | none | stable |
| Comparative Example 4 | PC/DME=1/1 | none | 1.8 | 275 | 1 | 2 | 273 | 1 | 2 | light yellow | slightly unstable |
| Comparative Example 5 | GBL | none | 2.5 | 276 | 1 | 2 | 275 | 1 | 2 | light yellow | slightly unstable |

As seen from Table 4, the limit oxygen index is raised and the safety of the non-aqueous electrolyte is considerably improved by adding the phosphazene derivative of the formula (IV) to the combustible aprotic organic solvent of Comparative Examples 2-5 having a lo oxygen index (corresponding to Examples 15-22). Also, the non-aqueous electrolytes of Examples 16, 18-22 are higher in the limit oxygen index than the non-aqueous electrolyte of Comparative Example 7 though the aprotic organic solvent is the same as in Comparative Example 7, so that the phosphazene derivative of the formula (IV) is particularly high in the ability of giving the safety to the non-aqueous electrolyte among the phosphazene derivatives. Further, the primary cells of Examples 15-22 are excellent in the discharge capacity, energy density, low-temperature characteristics and high-temperature characteristics, and very high in the characteristics as a primary cell.

Moreover, as seen from Table 5, the decomposition of the lithium slat proceeds in Comparative Examples 2, 4, 5 because the color tone of the electrolyte after being left for 2 months changes into light yellow. On the other hand, Examples 15-19 do not cause the change of color tone of the electrolyte and hence the decomposition of the lithium salt is suppressed and the resistance to deterioration is improved.

(Example 23)

A non-aqueous electrolyte primary cell is prepared in the same manner as in Example 1 except that a non-aqueous electrolyte is prepared by dissolving 10 g of a phosphazene derivative O (cyclic phosphazene derivative compound of the formula (V) in which n is 3 and all of $R^6$s are methoxy group) into 90 g of a mixed solvent of propylene carbonate (PC) and dimethoxyethane (DME) (mixing ratio is PC/DME = 1/1 as a volume ratio) and dissolving $LiCF_3SO_3$ (support salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 6 and 7.

(Example 24)

A non-aqueous electrolyte primary cell is prepared in the same manner as in Example 1 except that a non-aqueous electrolyte is prepared by dissolving 15 g of the phosphazene derivative O into 85 g of a mixed solvent of propylene carbonate (PC) and dimethoxyethane (DME) (mixing ratio is PC/DME = 1/1 as a volume ratio) and dissolving $LiCF_3SO_3$ (lithium salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 6 and 7.

(Example 25)

A non-aqueous electrolyte primary cell is prepared in the same manner as in Example 1 except that a non-aqueous electrolyte is prepared by dissolving 20 g of the phosphazene derivative O into 80 g of a mixed solvent of propylene carbonate (PC) and dimethoxyethane (DME) (mixing ratio is PC/DME = 1/1 as a volume ratio) and dissolving $LiCF_3SO_3$ (lithium salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 6 and 7.

(Example 26)

A non-aqueous electrolyte primary cell is prepared in the same manner as in Example 1 except that a non-aqueous electrolyte is prepared by dissolving 30 g of the phosphazene derivative O into 70 g of a mixed solvent of propylene carbonate (PC) and dimethoxyethane (DME) (mixing ratio is PC/DME = 1/1 as a volume ratio) and dissolving $LiCF_3SO_3$ (lithium salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 6 and 7.

(Comparative Example 8)

A non-aqueous electrolyte primary cell is prepared in the same manner as in Example 1 except that a non-aqueous electrolyte is prepared by dissolving 30 g of a phosphazene derivative P represented by the following formula (XIV) into 70 g of a mixed solvent of propylene carbonate (PC) and dimethoxyethane (DME) (mixing ratio is PC/DME = 1/1 as a volume ratio) and dissolving $LiCF_3SO_3$ (lithium salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 6 and 7.

$$(NP(OC_6H_5)_2)_3 \qquad (XIV)$$

(Comparative Example 4)

For the comparison, the cell characteristics of the non-aqueous electrolyte primary cell of Comparative example 4 in Table 2 are also shown in Table 6, and the electric conductivity, viscosity and resistance to deterioration of the non-aqueous electrolyte of Comparative Example 4 in Table 3 are also shown in Table 7.

Table 6

| | Phosphazene compound | | Initial electric potential (V) | Internal resistance (Ω) | Average discharge potential (V) | Discharge capacity at room temperature (mAh/g) | Energy density (Wh/kg) | Residual rate of discharge capacity (%) | | Limit oxygen index (volume %) | Evaluation |
|---|---|---|---|---|---|---|---|---|---|---|---|
| | | | | | | | | low-temperature characteristic | high-temperature characteristic | | |
| Example 23 | phosphazene derivative O | 10 weight % | 3.47 | 0.14 | 3.00 | 278 | 801 | 40 | 144 | 21.0 | self-extinguishing property |
| Example 24 | phosphazene derivative O | 15 weight % | 3.46 | 0.14 | 3.00 | 279 | 804 | 41 | 145 | 21.4 | self-extinguishing property |
| Example 25 | phosphazene derivative O | 20 weight % | 3.45 | 0.15 | 2.95 | 278 | 802 | 40 | 147 | 21.8 | self-extinguishing property |
| Example 26 | phosphazene derivative O | 30 weight % | 3.45 | 0.15 | 2.95 | 277 | 799 | 39 | 146 | 23.1 | flame retardance |
| Comparative Example 8 | phosphazene derivative P | 30 weight % | 3.28 | 0.33 | 2.70 | 251 | 593 | 7 | 140 | 22.0 | self-extinguishing property |
| Comparative Example 4 | none | none | 3.48 | 0.19 | 2.90 | 278 | 728 | 10 | 108 | 15.4 | combustibility |

Table 7

| | Phosphazene compound | | Electric conductivity (mS/cm) | Viscosity (mPa·s) | Evaluation of deterioration | | | | | | | |
|---|---|---|---|---|---|---|---|---|---|---|---|---|
| | | | | | initial | | | after being left for 2 months | | | Change of color tone | Evaluation |
| | | | | | discharge capacity (mAh/g) | HF concentration (ppm) | water content (ppm) | discharge capacity (mAh/g) | HF concentration (ppm) | water content (ppm) | | |
| Example 23 | phosphazene derivative O | 10 weight % | 5.11 | 5.8 | 278 | 1 | 1 | 277 | 1 | 1 | none | stable |
| Example 24 | phosphazene derivative O | 15 weight % | 5.06 | 6.5 | 278 | 1 | 1 | 278 | 1 | 1 | none | stable |
| Example 25 | phosphazene derivative O | 20 weight % | 5.03 | 7.2 | 275 | 1 | 1 | 277 | 1 | 1 | none | stable |
| Example 26 | phosphazene derivative O | 30 weight % | 5.00 | 8.0 | 276 | 1 | 1 | 277 | 1 | 1 | none | stable |
| Comparative Example 8 | phosphazene derivative P | 30 weight % | 4.12 | 11.8 | 250 | 1 | 1 | 248 | 1 | 1 | none | stable |
| Comparative Example 4 | none | none | 5.34 | 1.8 | 275 | 1 | 2 | 273 | 1 | 2 | light yellow | slightly unstable |

As seen from Table 6, the oxygen index is raised or the safety of the non-aqueous electrolyte is improved by adding the phosphazene derivative to the aprotic organic solvent of Comparative Exampled 4 having a low oxygen index (corresponding to Examples 23-26).

Also, as seen from Tables 6 and 7, the non-aqueous electrolyte primary cells of the invention (Examples 23-26) are low in the viscosity, high in the electric conductivity and excellent in the low-temperature characteristics as compared with that of Comparative Example 8. From these facts, it is clear that the phosphazene derivative of the formula (V) can provide excellent low-temperature characteristics among the phosphazene derivatives.

Further, as seen from Table 7, the decomposition of the lithium salt proceeds in Comparative Example 2 because the color tone of the electrolyte after being left for 2 months changes into light yellow, while Examples 23-26 do not cause the change of color tone of the electrolyte and hence the decomposition of the lithium salt is suppressed and the resistance to deterioration is improved.

(Example 27)

[Preparation of non-aqueous electrolyte]

A non-aqueous electrolyte is prepared by dissolving 10 mL of an additive for a non-aqueous electrolyte of a primary cell comprising 10% by volume of an isomer Q' (compound of the formula (VI) in which $X^2$ is a substituent represented by the formula (XI), $R^7$-$R^9$ and $R^{15}$-$R^{16}$ are ethyl group and $Y^7$-$Y^8$, $Y^{15}$-$Y^{16}$ and $Z^2$ are oxygen element) and 90% by volume of a phosphazene derivative Q (compound of the formula (VII) in which $X^2$ is a substituent represented by the formula (XI), $R^7$-$R^9$ and $R^{15}$-$R^{16}$ are ethyl group and $Y^7$-$Y^8$, $Y^{15}$-$Y^{16}$ and $Z^2$ are oxygen element) into 90 mL of a mixed solvent of propylene carbonate (PC) and dimethoxyethane (DME) (mixing ratio is PC/DME = 7/3 as a volume ratio) and dissolving $LiCF_3SO_3$ (support salt) at a concentration of 0.75 mol/L (M) thereinto.

Moreover, the above additive for the non-aqueous electrolyte of the primary cell is obtained by precision distillation of the phosphazene derivative Q at 188°C, and the content of the isomer Q' is determined from a peak ratio using a GPC analyzing machine (gel permeation chromatography, Model: HLC-8020 (provided with RI detector), made by Toso Co., Ltd.). In this case, TSKgelG1000HXL and TSKgenG2000HXL (made by Toso Co., Ltd.) are used as a column and tetrahydrofuran is developed at 1 mL/min as an extraction solvent.

[Preparation of non-aqueous electrolyte primary cell]

A non-aqueous electrolyte primary cell is prepared in the same manner as in Example 1 by using the above prepared non-aqueous electrolyte to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 8 and 9.

(Example 28)

A non-aqueous electrolyte primary cell is prepared in the same manner as in Example 1 except that a non-aqueous electrolyte is prepared by dissolving 10 mL of an additive for a non-aqueous electrolyte of a primary cell comprising 20% by volume of the isomer Q' and 80% by volume of the phosphazene derivative Q into 90 mL of a mixed solvent of propylene carbonate (PC) and dimethoxyethane (DME) (mixing ratio is PC/DME = 7/3 as a volume ratio) and then dissolving $LiCF_3SO_3$ (support salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 8 and 9.

(Example 29)

A non-aqueous electrolyte primary cell is prepared in the same manner as in Example 1 except that a non-aqueous electrolyte is prepared by dissolving 10 mL of an additive for a non-aqueous electrolyte of a primary cell comprising 30% by volume of the isomer Q' and 70% by volume of the phosphazene derivative Q into 90 mL of a mixed solvent of propylene carbonate (PC) and dimethoxyethane (DME) (mixing ratio is PC/DME = 7/3 as a volume ratio) and then dissolving $LiCF_3SO_3$ (support salt) at a concentration of 0.75 mol/L (M) thereinto to measure the initial cell characteristics (voltage, internal resistance), average discharge potential, discharge capacity at room temperature,

energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 8 and 9.

(Example 30)

A non-aqueous electrolyte primary cell is prepared in the same manner as in Example 1 except that a non-aqueous electrolyte is prepared by dissolving 20 mL of an additive for a non-aqueous electrolyte of a primary cell comprising 20% by volume of the isomer Q' and 80% by volume of the phosphazene derivative Q into 80 mL of a mixed solvent of propylene carbonate (PC) and dimethoxyethane (DME) (mixing ratio is PC/DME = 7/3 as a volume ratio) and then dissolving $LiCF_3SO_3$ (support salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 8 and 9.

(Comparative Example 9)

A non-aqueous electrolyte primary cell is prepared in the same manner as in Example 1 except that a non-aqueous electrolyte is prepared by dissolving 10 mL of the phosphazene derivative Q into 90 mL of a mixed solvent of propylene carbonate (PC) and dimethoxyethane (DME) (mixing ratio is PC/DME = 7/3 as a volume ratio) and then dissolving $LiCF_3SO_3$ (support salt) at a concentration of 0.75 mol/L (M) thereinto to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 8 and 9.

(Comparative Example 10)

A non-aqueous electrolyte primary cell is prepared in the same manner as in Example 1 except that a non-aqueous electrolyte is prepared by dissolving $LiCF_3SO_3$ (lithium salt) at a concentration of 0.75 mol/L (M) into a mixed solvent of 70% by volume of propylene carbonate (PC) and 30% by volume of dimethoxyethane (DME) to measure the initial cell characteristics (voltage, internal resistance), average discharge potential, discharge capacity at room temperature, energy density, low-temperature characteristics and high-temperature characteristics, respectively. Also, the oxygen index, electric conductivity and viscosity are measured in the same manner as in Example 11 by using this non-aqueous electrolyte, and further the deterioration of the electrolyte is evaluated. The results are shown in Tables 8 and 9.

Table 8

| | Content of isomer Q' in electrolyte | Content of phosphazene derivative Q in electrolyte | Initial electric potential (V) | Internal resistance (Ω) | Average discharge potential (V) | Discharge capacity at room temperature (mAh/g) | Energy density (Wh/kg) | Residual rate of discharge capacity (%) | | Limit oxygen index (volume %) | Evaluation |
|---|---|---|---|---|---|---|---|---|---|---|---|
| | | | | | | | | low-temperature characteristic | high-temperature characteristic | | |
| Example 27 | 1 volume % | 9 volume % | 3.46 | 0.17 | 3.01 | 280 | 801 | 30 | 134 | 21.2 | self-extinguishing property |
| Example 28 | 2 volume % | 8 volume % | 3.46 | 0.18 | 3.00 | 280 | 800 | 32 | 130 | 21.3 | self-extinguishing property |
| Example 29 | 3 volume % | 7 volume % | 3.45 | 0.17 | 3.00 | 280 | 802 | 30 | 130 | 21.5 | self-extinguishing property |
| Example 30 | 6 volume % | 14 volume % | 3.43 | 0.21 | 2.95 | 278 | 795 | 28 | 126 | 23.0 | flame retardance |
| Comparative Example 9 | none | 10 volume % | 3.45 | 0.19 | 3.00 | 278 | 789 | 20 | 120 | 21.4 | self-extinguishing property |
| Comparative Example 10 | none | none | 3.46 | 0.19 | 2.90 | 278 | 728 | 10 | 108 | 16.3 | combustibility |

Table 9

| | Content of isomer Q' in electrolyte | Content of phosphazene derivative Q in electrolyte | Viscosity (mPa· s) | Evaluation of deterioration | | | | | | | |
|---|---|---|---|---|---|---|---|---|---|---|---|
| | | | | initial | | | after being left for 2 months | | | | |
| | | | | discharge capacity (mAh/g) | HF concentration (ppm) | water content (ppm) | discharge capacity (mAh/g) | HF concentration (ppm) | water content (ppm) | Change of color tone | Evaluation |
| Example 27 | 1 volume % | 9 volume % | 2.1 | 280 | 1 | 1 | 279 | 1 | 1 | none | stable |
| Example 28 | 2 volume % | 8 volume % | 2.1 | 280 | 1 | 1 | 280 | 1 | 1 | none | stable |
| Example 29 | 3 volume % | 7 volume % | 2.0 | 279 | 1 | 1 | 280 | 1 | 1 | none | stable |
| Example 30 | 6 volume % | 14 volume % | 2.9 | 275 | 1 | 1 | 275 | 1 | 1 | none | stable |
| Comparative Example 9 | none | 10 volume % | 2.1 | 276 | 1 | 1 | 275 | 1 | 1 | none | stable |
| Comparative Example 10 | none | none | 1.8 | 278 | 1 | 2 | 275 | 1 | 2 | light yellow | slightly unstable |

As seen from Table 8, the oxygen index is raised or the safety of the non-aqueous electrolyte is improved by adding the mixture of the isomer and phosphazene derivative to the aprotic organic solvent of Comparative Example 10 having a low oxygen index (corresponding to Examples 27-30).

Also, the non-aqueous electrolyte primary cells of Examples 27-29 are excellent in the low-temperature characteristics as compared with that of Comparative Example 9, so that the use of the additive containing the isomer is superior in the low-temperature characteristics to the use of the additive containing no isomer.

Furthermore, as seen from Table 9, the decomposition of the lithium salt proceeds in Comparative Example 9 because the color tone of the electrolyte after being left for 2 months changes into light yellow, while Examples 27-30 do not cause the change of color tone of the electrolyte and hence the decomposition of the lithium salt is suppressed and the resistance to deterioration is improved.

INDUSTRIAL APPLICABILITY

According to the first and second inventions, there can be provided non-aqueous electrolyte primary cells being low in the risk of fire-ignition and having excellent cell characteristics. In case of using the phosphazene represented by the formula (III), there can be provided the non-aqueous electrolyte primary cell wherein the safety and the resistance to deterioration are excellent, the interfacial resistance of the non-aqueous electrolyte is low, the internal resistance is low and the electric conductivity is high, and the viscosity is low and the low-temperature characteristics are excellent. Also, in case of using the phosphazene represented by the formula (IV), there can be provided the non-aqueous electrolyte primary cell wherein the resistance to deterioration is excellent, the interfacial resistance of the non-aqueous electrolyte is low, the low-temperature characteristics are excellent and the safety is very high.

According to the third invention, there can be provided non-aqueous electrolyte primary cells wherein the self-extinguishing property or flame retardance is excellent, the resistance to deterioration is excellent, the interfacial resistance of the non-aqueous electrolyte is low, the low-temperature characteristics are excellent, the internal resistance is low and the electric conductivity is high and the long-time stability is excellent.

According to the fourth invention, there can be provided non-aqueous electrolyte primary cells wherein the self-extinguishing property or flame retardance is excellent, the resistance to deterioration is excellent, the interfacial resistance of the non-aqueous electrolyte is low and the low-temperature characteristics are excellent.

**Claims**

1. A non-aqueous electrolyte comprising a positive electrode, a negative electrode, a support salt and a non-aqueous electrolyte containing a phosphazene derivative having a viscosity at 25°C of not more than 100 mPa·s (100 cP).

2. A non-aqueous electrolyte comprising a positive electrode, a negative electrode, a support salt and a non-aqueous electrolyte containing a phosphazene derivative having a viscosity at 25°C of not more than 20 mPa·s (20 cP) and an aprotic organic solvent.

3. A non-aqueous electrolyte primary cell according to claim 2, wherein the aprotic organic solvent contains a cyclic or chain ester compound or a chain ether compound.

4. A non-aqueous electrolyte primary cell according to claim 1 or 2, wherein the phosphazene derivative is represented by the following formula (I) or (II):

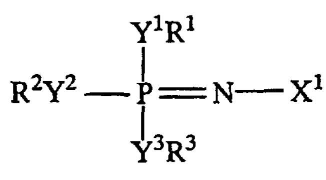

····· (I)

.

(wherein $R^1$, $R^2$ and $R^3$ are independently a monovalent substituent or a halogen element, $X^1$ is an organic group containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently a bivalent connecting group, a bivalent element or a single bond) or

$$(NPR^4{}_2)_n \qquad (II)$$

(wherein $R^4$ is a monovalent substituent or a halogen element, and n is 3 to 15).

**5.** A non-aqueous electrolyte primary cell according to any one of claims 1 to 4, wherein the non-aqueous electrolyte has a limit oxygen index of not less than 21% by volume.

**6.** A non-aqueous electrolyte primary cell according to claim 4, wherein the phosphazene derivative of the formula (II) is a phosphazene derivative represented by the following formula (III):

$$(NPF_2)_n \qquad (III)$$

(wherein n is 3 to 13).

**7.** A non-aqueous electrolyte primary cell according to claim 6, wherein a content of the phosphazene derivative of the formula (III) in the non-aqueous electrolyte is not less than 1% by volume.

**8.** A non-aqueous electrolyte primary cell according to claim 7, wherein the content of the phosphazene derivative of the formula (III) in the non-aqueous electrolyte is not less than 2% by volume.

**9.** A non-aqueous electrolyte primary cell according to any one of claims 6 to 8, wherein the non-aqueous electrolyte has a viscosity at 25°C of not more than 4.0 mPa·s (4.0 cP).

**10.** A non-aqueous electrolyte primary cell according to any one of claims 6 to 9, wherein the non-aqueous electrolyte has a limit oxygen index of not less than 21% by volume.

**11.** A non-aqueous electrolyte primary cell according to claim 4, wherein the phosphazene derivative of the formula (II) is a phosphazene derivative represented by the following formula (IV):

$$(NPR^5{}_2)_n \qquad (IV)$$

(wherein $R^5$ is independently a monovalent substituent or a fluorine element, and n is 3-8 provided that at least one of all $R^5$s is a fluorine-containing monovalent substituent or a fluorine element but all $R^5$s are not fluorine element).

**12.** A non-aqueous electrolyte primary cell according to claim 11, wherein at least one of all $R^5$s is a fluorine element and the monovalent substituent is an alkoxy group.

**13.** A non-aqueous electrolyte primary cell according to claim 12, wherein the alkoxy group is selected from the group consisting of methoxy group, ethoxy group and phenoxy group.

**14.** A non-aqueous electrolyte primary cell according to claim 11, wherein the fluorine-containing monovalent substituent is trifluoroethoxy group.

**15.** A non-aqueous electrolyte primary cell according to claim 11, wherein a content of the phosphazene derivative of the formula (IV) in the non-aqueous electrolyte is not less than 2% by volume.

**16.** A non-aqueous electrolyte primary cell according to claim 15, wherein the content of the phosphazene derivative of the formula (IV) in the non-aqueous electrolyte is not less than 10% by volume.

**17.** A non-aqueous electrolyte primary cell according to claim 11, wherein the non-aqueous electrolyte comprises $LiBF_4$ as a support salt, γ-butyrolactone and/or propylene carbonate as an aprotic solvent and not less than 5% by volume of the phosphazene derivative represented by the formula (IV).

**18.** A non-aqueous electrolyte primary cell according to claim 11, wherein the non-aqueous electrolyte comprises $LiCF_3SO_3$ as a support salt, γ-butyrolactone and/or propylene carbonate as an aprotic solvent and not less than 5% by volume of the phosphazene derivative represented by the formula (IV).

**19.** A non-aqueous electrolyte primary cell according to any one of claims 11 to 18, wherein the non-aqueous electrolyte has a limit oxygen index of not less than 22% by volume.

**20.** A non-aqueous electrolyte primary cell comprising a positive electrode, a negative electrode, and a non-aqueous electrolyte containing a support salt and a phosphazene derivative being a solid at 25°C and represented by the following formula (V):

$$(NPR^6{}_2)_n \qquad (V)$$

(wherein $R^6$ is independently a monovalent substituent or a halogen element, and n is 3 to 6).

**21.** A non-aqueous electrolyte primary cell according to claim 20, wherein the phosphazene derivative of the formula (V) is at least one of a structure in which in the formula (V) $R^6$ is methoxy group and n is 3, a structure in which in the formula (V) $R^6$ is either methoxy group or phenoxy group and n is 4, a structure in which in the formula (V) $R^6$ is ethoxy group and n is 4, a structure in which in the formula (V) $R^6$ is isopropoxy group and n is 3 or 4, a structure in which in the formula (V) $R^6$ is n-propoxy group and n is 4, a structure in which in the formula (V) $R^6$ is trifluoroethoxy group and n is 3 or 4, and a structure in which in the formula (V) $R^6$ is phenoxy group and n is 3 or 4.

**22.** A non-aqueous electrolyte primary cell according to claim 20, wherein the non-aqueous electrolyte has a viscosity at 25°C of not more than 10 mPa·s (10 cP).

**23.** A non-aqueous electrolyte primary cell according to claim 20, wherein a content of the phosphazene derivative of the formula (V) in the non-aqueous electrolyte is not more than 40% by weight.

**24.** A non-aqueous electrolyte primary cell according to claim 20, wherein a content of the phosphazene derivative of the formula (V) in the non-aqueous electrolyte is not less than 2% by weight.

**25.** A non-aqueous electrolyte primary cell according to claim 20, wherein a content of the phosphazene derivative of the formula (V) in the non-aqueous electrolyte is not less than 20% by weight.

**26.** A non-aqueous electrolyte primary cell according to claim 20, wherein a content of the phosphazene derivative of the formula (V) in the non-aqueous electrolyte is not less than 30% by weight.

**27.** A non-aqueous electrolyte primary cell according to claim 20, wherein the non-aqueous electrolyte contains an aprotic organic solvent.

**28.** A non-aqueous electrolyte primary cell according to claim 27, wherein the aprotic organic solvent contains a cyclic or chain ester compound or a chain ether compound.

**29.** A non-aqueous electrolyte primary cell according to claim 20, wherein the non-aqueous electrolyte comprises $LiBF_4$ as a support salt, γ-butyrolactone and/or propylene carbonate as an aprotic solvent and 5-10% by weight of the phosphazene derivative represented by the formula (V).

**30.** A non-aqueous electrolyte primary cell according to claim 20, wherein the non-aqueous electrolyte comprises $LiBF_4$ as a support salt, γ-butyrolactone and/or propylene carbonate as an aprotic solvent and more than 10% by weight of the phosphazene derivative represented by the formula (V).

**31.** A non-aqueous electrolyte primary cell according to claim 20, wherein the non-aqueous electrolyte comprises $LiCF_3SO_3$ as a support salt, γ-butyrolactone and/or propylene carbonate as an aprotic solvent and 5-25% by weight of the phosphazene derivative represented by the formula (V).

**32.** A non-aqueous electrolyte primary cell according to claim 20, wherein the non-aqueous electrolyte comprises

$LiCF_3SO_3$ as a support salt, γ-butyrolactone and/or propylene carbonate as an aprotic solvent and more than 25% by volume of the phosphazene derivative represented by the formula (V).

**33.** A non-aqueous electrolyte primary cell according to any one of claims 20 to 25, 27 to 29 and 31, wherein the non-aqueous electrolyte has a limit oxygen index of not less than 21% by volume.

**34.** A non-aqueous electrolyte primary cell according to any one of claims 20 to 24, 26 to 28, 30 and 32, wherein the non-aqueous electrolyte has a limit oxygen index of not less than 23% by volume.

**35.** A non-aqueous electrolyte primary cell comprising a positive electrode, a negative electrode, and a non-aqueous electrolyte containing a support salt and isomers of phosphazene derivatives represented by the following formulae (VI) and (VII):

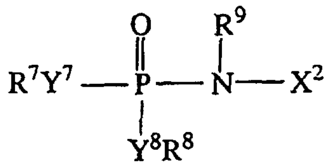

..... (VI)

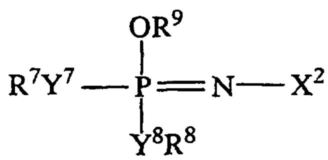

..... (VII)

(wherein $R^7$, $R^8$ and $R^9$ are independently a monovalent substituent or a halogen element, $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently a bivalent connecting group, a bivalent element or a single bond).

**36.** A non-aqueous electrolyte primary cell according to claim 35, which contains a phosphazene derivative represented by the formula (VII).

**37.** A non-aqueous electrolyte primary cell according to claim 36, wherein a total content of the isomer of the phosphazene derivative represented by the formulae (VI) and (VII) and the phosphazene derivative represented by the formula (VII) in the non-aqueous electrolyte is not less than 1% by volume.

**38.** A non-aqueous electrolyte primary cell according to claim 37, wherein the total content of the isomer of the phosphazene derivative represented by the formulae (VI) and (VII) and the phosphazene derivative represented by the formula (VII) in the non-aqueous electrolyte is not less than 2% by volume.

**39.** A non-aqueous electrolyte primary cell according to claim 38, wherein the total content of the isomer of the phosphazene derivative represented by the formulae (VI) and (VII) and the phosphazene derivative represented by the formula (VII) in the non-aqueous electrolyte is not less than 20% by volume.

**40.** A non-aqueous electrolyte primary cell according to claim 38, wherein the total content of the isomer of the phosphazene derivative represented by the formulae (VI) and (VII) and the phosphazene derivative represented by the formula (VII) in the non-aqueous electrolyte is not less than 30% by volume.

**41.** A non-aqueous electrolyte primary cell according to claim 35, wherein the non-aqueous electrolyte contains an aprotic organic solvent.

**42.** A non-aqueous electrolyte primary cell according to claim 41, wherein the aprotic organic solvent contains a cyclic or chain ester compound or a chain ether compound.

**43.** A non-aqueous electrolyte primary cell according to claim 35 or 36, wherein the non-aqueous electrolyte comprises

$LiBF_4$ as a support salt, not less than 45% by volume of γ-butyrolactone and/or propylene carbonate as an aprotic solvent and 1.5-10% by weight in total of the isomer of the phosphazene derivative represented by the formulae (VI) and (VII) and the phosphazene derivative represented by the formula (VII).

**44.** A non-aqueous electrolyte primary cell according to claim 35 or 36, wherein the non-aqueous electrolyte comprises $LiBF_4$ as a support salt, not less than 45% by volume of γ-butyrolactone and/or propylene carbonate as an aprotic solvent and more than 10% by weight in total of the isomer of the phosphazene derivative represented by the formulae (VI) and (VII) and the phosphazene derivative represented by the formula (VII).

**45.** A non-aqueous electrolyte primary cell according to claim 35 or 36, wherein the non-aqueous electrolyte comprises $LiCF_3SO_3$ as a support salt, not less than 45% by volume of γ-butyrolactone and/or propylene carbonate as an aprotic solvent and 2.5-15% by weight in total of the isomer of the phosphazene derivative represented by the formulae (VI) and (VII) and the phosphazene derivative represented by the formula (VII).

**46.** A non-aqueous electrolyte primary cell according to claim 35 or 36, wherein the non-aqueous electrolyte comprises $LiCF_3SO_3$ as a support salt, not less than 45% by volume of γ-butyrolactone and/or propylene carbonate as an aprotic solvent and more than 15% by weight in total of the isomer of the phosphazene derivative represented by the formulae (VI) and (VII) and the phosphazene derivative represented by the formula (VII).

**47.** A non-aqueous electrolyte primary cell according to any one of claims 35 to 39, 41 to 43 and 45, wherein the non-aqueous electrolyte has a limit oxygen index of not less than 21% by volume.

**48.** A non-aqueous electrolyte primary cell according to any one of claims 35 to 38, 40 to 42, 44 and 46, wherein the non-aqueous electrolyte has a limit oxygen index of not less than 23% by volume.

**49.** An additive for a non-aqueous electrolyte of a primary cell comprising a phosphazene derivative represented by the following formula (I) or (II):

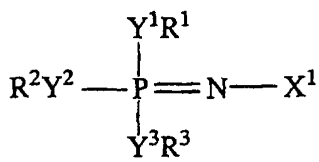

····· (I)

(wherein $R^1$, $R^2$ and $R^3$ are independently a monovalent substituent or a halogen element, $X^1$ is an organic group containing at least one element selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are independently a bivalent connecting group, a bivalent element or a single bond) or

$$(NPR^4{}_2)_n \qquad (II)$$

(wherein $R^4$ is a monovalent substituent or a halogen element, and n is 3 to 15).

**50.** An additive for a non-aqueous electrolyte of a primary cell according to claim 49, which has a limit oxygen index of not less than 21% by volume.

**51.** An additive for a non-aqueous electrolyte of a primary cell according to claim 49, wherein the phosphazene derivative of the formula (II) is a phosphazene derivative represented by the following formula (III):

$$(NPF_2)_n \qquad (III)$$

(wherein n is 3 to 13).

**52.** An additive for a non-aqueous electrolyte of a primary cell according to claim 49, wherein the phosphazene derivative of the formula (II) is a phosphazene derivative represented by the following formula (IV):

$$(NPR^5{}_2)_n \qquad (IV)$$

(wherein $R^5$ is independently a monovalent substituent or a fluorine element, and n is 3-8 provided that at least one of all $R^5$s is a fluorine-containing monovalent substituent or a fluorine element but all $R^5$s are not fluorine element).

**53.** An additive for a non-aqueous electrolyte of a primary cell according to claim 52, wherein at least one of all $R^5$s is a fluorine element and the monovalent substituent is an alkoxy group.

**54.** An additive for a non-aqueous electrolyte of a primary cell according to claim 53, wherein the alkoxy group is selected from the group consisting of methoxy group, ethoxy group and phenoxy group.

**55.** An additive for a non-aqueous electrolyte of a primary cell according to claim 52, wherein the fluorine-containing monovalent substituent is trifluoroethoxy group.

**56.** An additive for a non-aqueous electrolyte of a primary cell comprising a phosphazene derivative being a solid at 25°C and represented by the following formula (V):

$$(NPR^6{}_2)_n \qquad (V)$$

(wherein $R^6$ is independently a monovalent substituent or a halogen element, and n is 3 to 6).

**57.** An additive for a non-aqueous electrolyte of a primary cell according to claim 56, wherein the phosphazene derivative of the formula (V) is at least one of a structure in which in the formula (V) $R^6$ is methoxy group and n is 3, a structure in which in the formula (V) $R^6$ is either methoxy group or phenoxy group and n is 4, a structure in which in the formula (V) $R^6$ is ethoxy group and n is 4, a structure in which in the formula (V) $R^6$ is isopropoxy group and n is 3 or 4, a structure in which in the formula (V) $R^6$ is n-propoxy group and n is 4, a structure in which in the formula (V) $R^6$ is trifluoroethoxy group and n is 3 or 4, and a structure in which in the formula (V) $R^6$ is phenoxy group and n is 3 or 4.

**58.** An additive for a non-aqueous electrolyte of a primary cell comprising isomers of phosphazene derivatives represented by the following formulae (VI) and (VII):

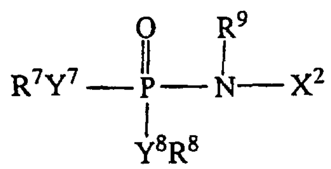

..... (VI)

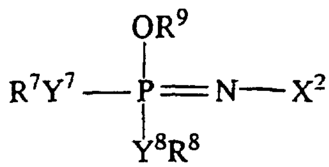

..... (VII)

(wherein $R^7$, $R^8$ and $R^9$ are independently a monovalent substituent or a halogen element, $X^2$ is a substituent containing at least one element selected from the group consisting of carbon, silicon, germanium, tin, nitrogen, phosphorus, arsenic, antimony, bismuth, oxygen, sulfur, selenium, tellurium and polonium, and $Y^7$ and $Y^8$ are independently a bivalent connecting group, a bivalent element or a single bond).

**59.** An additive for a non-aqueous electrolyte of a primary cell according to claim 58, which contains a phosphazene

derivative represented by the formula (VII).

## INTERNATIONAL SEARCH REPORT

International application No.
PCT/JP02/11173

A. CLASSIFICATION OF SUBJECT MATTER
Int.Cl[7] H01M6/16

According to International Patent Classification (IPC) or to both national classification and IPC

B. FIELDS SEARCHED

Minimum documentation searched (classification system followed by classification symbols)
Int.Cl[7] H01M6/16

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-516492 A (SRI International), 25 September, 2001 (25.09.01), Claims; pages 19, 23, 25 (Family: none) | 1 |
| X | JP 6-13108 A (Bridgestone Corp.), 21 January, 1994 (21.01.94), Par. Nos. [0018] to [0021] (Family: none) | 1 |
| X | JP 2001-102088 A (Bridgestone Corp.), 13 April, 2001 (13.04.01), Par. No. [0050] (Family: none) | 1 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 January, 2003 (27.01.03) | Date of mailing of the international search report<br>12 February, 2003 (12.02.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/11173

**Box I Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

(see extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP02/11173

Continuation of Box No.II of continuation of first sheet(1)

Where a group of inventions is claimed, the requirement of unity of invention shall be fulfilled only when there is a special technical feature which links the group of inventions so as to form a single general inventive concept.

A. Independent claims 1, 2, 20, 35, 49, 56 and 58 have a common technical matter of a non-aqueous electrolyte primary cell or an additive for a non-aqueous electrolyte primary cell which contains a phosphazene derivative. This technical matter is, however, described in prior art documents, such as JP 2001-516492 A (S.R.I international) 2001. 09. 25 (hereinafter, referred to as "Document 1"), JP 6-13108 A (Bridgestone Corporation) 1994. 01. 21 (hereinafter, referred to as "Document 2"), and JP 2001-102088 A (Bridgestone Corporation) 2001. 04. 13 (hereinafter, referred to as "Document 3"), and therefore, can not be a "special technical feature".

B. The scope of claims, the section for industrial applicability (page 25), page 19 and page 23 in Document 1, [0018] to [0021] in Document 2, and [0050] in Document 3 teach that a phosphazene derivative having a viscosity of 100 mPa · s or less at 25°C is used as a solvent for a non-aqueous electrolyte or is incorporated in a non-aqueous electrolyte. Accordingly, the technical matter of "a non-aqueous electrolyte primary cell having a positive electrode, a negative electrode, and a non-aqueous electrolyte containing a supporting electrolyte and a phosphazene derivative having a viscosity of 100 mPa · s or less at 25°C" described in claim 1 can not be a "special technical feature".

C. The scope of claims, the section for industrial applicability (page 25), page 19 and page 23 in Document 1 further teach that a cyclic phosphazene derivative which has a viscosity of 20 mPa·s or less at 25 °C, has three recurring units, and contains a fluorine atom in its substituent may be used together with ethylene carbonate which is an aprotic solvent.

Accordingly, the tecnical matters described in claims 2 and 3, the part of claim 4 which includes a cyclic phosphazene derivative, claims 11 and 12, the part of claim 49 which includes a cyclic phosphazene derivative, and claims 52 and 53 can not also be a "special technical feature".

D. From the above, the inventions which can not be linked by a "special technical feature" are considered to be at least 13 inventions, i.e., claim 1, claim 2, claim 3, the invention including a cyclic phosphazene derivative in claim 4, the invention including a chain phosphazene derivative in claim 4, claim 11, claim 12, claims 20 and 56, claims 35 and 58, the invention including a cyclic phosphazene derivative in claim 49, the invention including a chain phosphazene derivative in claim 49, claim 52 and claim 53, even if it is not taken into consideration that claim 4 and the like are defined by referring to claims having no "special technical feature".

Form PCT/ISA/210 (extra sheet) (July 1998)